# EUROPEAN PATENT APPLICATION

(11) **EP 4 644 432 A1**
(43) Date of publication of application: **05.11.2025**
(21) Application number: 23912029.8
(22) Date of filing: 25.12.2023
(51) Int. Cl.: C08F 8/00, C08F 16/06, C08F 290/12

(54) **POLYVINYL ALCOHOL POLYMER, DISPERSION STABILIZER, AND METHOD FOR PRODUCING VINYL POLYMER**

(30) Priority: 28.12.2022 JP 2022212784
(71) Applicant: Japan Vam & Poval Co., Ltd., Sakai-shi, Osaka 592-8331 (JP)
(72) Inventor: OMORI, Takehiro, Sakai-shi, Osaka 592-8331 (JP); KOZUKA, Yoshiaki, Sakai-shi, Osaka 592-8331 (JP)
(74) Representative: Kraus & Lederer PartGmbB
(86) International application number: PCT/JP2023/046330
(87) International publication number: WO 2024/143249

(57) **Abstract**

Provided is a polyvinyl alcohol-based polymer and others. The polyvinyl alcohol-based polymer satisfies the following requirements 1 and 2: requirement 1: the polyvinyl alcohol-based polymer has a polymerizable unsaturated bond, and requirement 2: when determined by thermogravimetry in a temperature range of 150°C or more, a temperature at which a weight loss rate exceeds 0.5%/min is 255°C or more.

## Description

### TECHNICAL FIELD

The present invention relates to a polyvinyl alcohol-based polymer; various applications of the polyvinyl alcohol-based polymer, including, for example, its application as a dispersion stabilizing agent, for example, as a dispersion stabilizing agent for suspension polymerization of a vinyl-based monomer, in particular, a vinyl chloride monomer; and a method for producing a vinyl-based polymer, in particular, a vinyl chloride-based polymer (resin), using the polyvinyl alcohol-based polymer or the dispersion stabilizing agent.

### BACKGROUND ART

The industrial production process of a vinyl chloride-based resin is generally performed by batch suspension polymerization, which involves the dispersion of a vinyl-based monomer, such as vinyl chloride, in an aqueous solvent in the presence of a dispersion stabilizing agent followed by polymerization using an oil-soluble polymerization initiator. The quality of a vinyl chloride-based resin in a polymerization process is dictated by various factors, including a polymerization percentage, the ratio of monomers to an aqueous solvent, polymerization temperature, the type and amount of a polymerization initiator, the type of polymerization vessel, stirring speed, and the type and amount of a dispersion stabilizing agent, etc. Among these, a dispersion stabilizing agent largely contributes to the quality of a vinyl chloride-based resin.

The roles of a dispersion stabilizing agent in suspension polymerization for producing a vinyl chloride-based resin are to disperse monomers in an aqueous solvent to form stable droplets, to uniformize the sizes of the droplets that repeatedly disperse and integrate, and to control the agglomeration of polymerized particles. Accordingly, a dispersion stabilizing agent is required to have the following functions:
(1) to control the size of resulting vinyl chloride-based resin particles within an appropriate range;
(2) to increase plasticizer absorption by resulting vinyl chloride-based resin particles to improve molding processability;
(3) to control the porosity of resulting vinyl chloride-based resin particles within a certain range to facilitate the removal of residual monomers;
(4) to enhance the thermal stability of resulting vinyl chloride-based resin particles;
   etc.

In other words, a dispersion stabilizing agent is required, for example, to exhibit a high dispersion ability (protective colloid properties), to appropriately control the particle size, the particle shape, or the like of a vinyl chloride-based resin, and to have other abilities.

A dispersion stabilizing agent commonly used in the art includes polyvinyl alcohol-based resins (hereinafter may be abbreviated as PVAs, PVA-based resins, PVA-based polymers, etc.), cellulose derivatives, etc., which are used alone or in combination as appropriate.

For example, Non-Patent Literature 1 discloses methods using a PVA as a dispersion stabilizing agent for suspension polymerization of vinyl chloride, wherein the PVA is a PVA having a high emulsifying capacity and a viscosity-average degree of polymerization of 2000 and a degree of saponification of 88 or 80 mol%, or a PVA having a viscosity-average degree of polymerization of 600 to 700 and a degree of saponification of about 70 mol%.

Patent Literature 1 proposes a dispersion stabilizing agent for suspension polymerization, wherein the dispersion stabilizing agent contains a polyvinyl alcohol-based polymer (B) containing double bonds on the side chains and is produced by acetalization of a polyvinyl alcohol-based polymer (A) with a monoaldehyde having an olefinic unsaturated double bond.

### CITATION LIST

### PATENT LITERATURE

Patent Literature 1: WO 2015/182567

### NON-PATENT LITERATURE

Non-Patent Literature 1: "Poval", Kobunshi Kankokai, issued in 1981.

### SUMMARY OF INVENTION

### TECHNICAL PROBLEM

An object of the present invention is to provide a polyvinyl alcohol (PVA)-based polymer and others.

### SOLUTION TO PROBLEM

PVAs have been used as a dispersion stabilizing agent for suspension polymerization of vinyl chloride etc. as described above. Techniques for further improving such PVAs used as a dispersion stabilizing agent etc. are being developed.

In particular, Patent Literature 1 relates to a technique developed by the present inventors. In this technique, a PVA is modified (acetalized) with a monoaldehyde having an olefinic unsaturated double bond to improve the polymerization stability and the dispersion ability (protective colloid properties).

Investigations by the present inventors revealed that the type of PVA used may affect the thermal stability of the resulting resin, such as a vinyl chloride-based resin, and may even reduce the thermal stability of the resulting resin. However, it was unclear what type of PVA may affect the thermal stability of a resin, how a PVA may affect the thermal stability of a resin, or what factors are involved in such influences on the thermal stability of a resin. These made it very difficult to search for a PVA useful for improving the thermal stability of a resin.

These influences on the thermal stability remain (are not improved) even after modification (acetalization) with a monoaldehyde having an olefinic unsaturated double bond, as described in Patent Literature 1. This also made it very difficult to search for a PVA capable of improving polymerization stability and dispersion ability and improving the thermal stability of a resin (or imparting sufficient thermal stability to a resin).

Under these circumstances, the present inventors found that the thermal properties of a PVA itself may affect the thermal stability of the resulting resin. The inventors further conducted extensive studies, and found that a PVA having specific thermal properties (thermal characteristics) can improve the thermal stability of the resulting resin (or impart sufficient thermal stability to the resulting resin). The inventors also found that, in particular, such a tendency is observed even when a PVA having an unsaturated bond (an unsaturated double bond) described in Patent Literature 1 is used. The inventors further found that the PVA having specific thermal properties can improve polymerization stability and dispersion ability and can realize the thermal stability of the resulting resin (or impart sufficient thermal stability to the resulting resin). The inventors carried out further studies and completed the present invention.

Thus, the present invention relates to the following and others.
[1] A polyvinyl alcohol-based polymer (A) satisfying the following requirements 1 and 2:
   requirement 1: the polyvinyl alcohol-based polymer (A) has a polymerizable unsaturated bond, and
   requirement 2: when determined by thermogravimetry in a temperature range of 150°C or more, a temperature at which a weight loss rate exceeds 0.5%/min is 255°C or more.
[2] The polyvinyl alcohol-based polymer (A) according to the above [1], wherein the polymerizable unsaturated bond is in an amount of 3 µmol/g or more.
[3] The polyvinyl alcohol-based polymer (A) according to the above [1] or [2], wherein the temperature at which the weight loss rate exceeds 0.5%/min is 258°C or more as determined by thermogravimetry in a temperature range of 150°C or more.
[4] The polyvinyl alcohol-based polymer (A) according to any one of the above [1] to [3], wherein the polymerizable unsaturated bond is in an amount of 5 to 500 µmol/g, and
   the temperature at which the weight loss rate exceeds 0.5%/min is 260°C or more as determined by thermogravimetry in a temperature range of 150°C or more.
[5] The polyvinyl alcohol-based polymer (A) according to any one of the above [1] to [4], wherein the polyvinyl alcohol-based polymer (A) comprises an acetal skeleton (a) having a polymerizable unsaturated bond.
[6] The polyvinyl alcohol-based polymer (A) according to any one of the above [1] to [5], wherein the polyvinyl alcohol-based polymer (A) comprises an acetal skeleton (a) having a polymerizable unsaturated bond,
   wherein the acetal skeleton (a) comprises a skeleton represented by the following formula (a1): 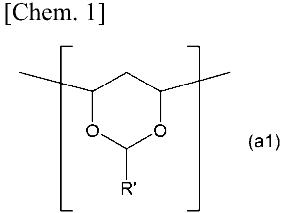
   wherein R' represents a group having a polymerizable unsaturated bond.
[7] The polyvinyl alcohol-based polymer (A) according to any one of the above [1] to [6], wherein the polyvinyl alcohol-based polymer (A) comprises an acetal skeleton (a) having a polymerizable unsaturated bond,
   wherein the acetal skeleton (a) comprises a skeleton represented by the formula (a1), and
   wherein the acetal skeleton (a) is contained in an amount of 0.05 to 5 mol% per monomer unit.
[8] The polyvinyl alcohol-based polymer (A) according to any one of the above [1] to [7], wherein the polyvinyl alcohol-based polymer (A) further comprises an ionic skeleton (b).
[9] The polyvinyl alcohol-based polymer (A) according to any one of the above [1] to [8], wherein the polyvinyl alcohol-based polymer (A) further comprises an ionic skeleton (b), and
   wherein the ionic skeleton (b) is contained in an amount of 0.01 to 5 mol% per monomer unit.
[10] The polyvinyl alcohol-based polymer (A) according to any one of the above [1] to [9], wherein the polyvinyl alcohol-based polymer (A) has a degree of saponification of 50 to 90 mol%.
[11] The polyvinyl alcohol-based polymer (A) according to any one of the above [1] to [10], wherein a 4% by mass aqueous solution of the polyvinyl alcohol-based polymer (A) has a viscosity of 1 to 300 mPa·s, for example, 1 to 100 mPa·s, or 2 to 100 mPa·s, at 20°C.
[12] A dispersion stabilizing agent comprising the polyvinyl alcohol-based polymer (A) according to any one of the above [1] to [11].
[13] The dispersion stabilizing agent according to the above [12], wherein the dispersion stabilizing agent is for polymerization.
[14] The dispersion stabilizing agent according to the above [12] or [13], wherein the dispersion stabilizing agent is for suspension polymerization.
[15] The dispersion stabilizing agent according to any one of the above [12] to [14], wherein the dispersion stabilizing agent is for suspension polymerization of a vinyl-based monomer containing vinyl chloride.
[16] A method for producing a vinyl-based polymer, the method comprising performing polymerization of a vinyl-based monomer in the presence of the polyvinyl alcohol-based polymer (A) or the dispersion stabilizing agent according to any one of the above [1] to [15].
[17] The production method according to the above [16], wherein the polymerization is suspension polymerization.
[18] The production method according to the above [16] or [17], wherein the method comprising performing suspension polymerization of a vinyl-based monomer containing vinyl chloride.
[19] Use of the polyvinyl alcohol-based polymer (A) according to any one of the above [1] to [11] for a dispersion stabilizing agent (a dispersing agent).
[20] The use according to the above [19], wherein the dispersion stabilizing agent is a dispersion stabilizing agent for suspension polymerization.
[21] The use according to the above [19] or [20], wherein the dispersion stabilizing agent is a dispersion stabilizing agent for suspension polymerization of a vinyl-based monomer containing vinyl chloride.
[22] Use of the polyvinyl alcohol-based polymer (A) according to any one of the above [1] to [11] in polymerization of a vinyl-based monomer.
[23] The use according to the above [22], wherein the polymerization is suspension polymerization.
[24] The use according to the above [22] or [23], wherein the polymerization is suspension polymerization of a vinyl-based monomer containing vinyl chloride.

### ADVANTAGEOUS EFFECTS OF INVENTION

The present invention provides a PVA (a novel PVA or a specific PVA), and use thereof, such as use as a dispersion stabilizing agent etc.

The PVA, such as the PVA used as a dispersion stabilizing agent etc., has specific thermal properties. In particular, the PVA itself, such as the PVA used as a dispersion stabilizing agent etc., has excellent thermal stability while having an unsaturated double bond.

The PVA also has a function as a dispersion stabilizing agent. For example, the PVA exhibits an excellent dispersion ability (protective colloid properties) and achieves excellent polymerization stability, and thus can be used to produce a resin (e.g., a vinyl-based polymer such as a vinyl chloride-based resin) with excellent plasticizer absorption and thermal stability. Thus, the PVA can serve as a dispersion stabilizing agent, and at the same time, improve the thermal stability of the resulting resin (or impart sufficient thermal stability to the resulting resin).

### DESCRIPTION OF EMBODIMENTS

Embodiments of the present invention will be described in detail below. The present invention is not limited to the embodiments described below.

The polyvinyl alcohol-based polymer of the present invention (also referred to as the polyvinyl alcohol-based polymer (A), the PVA-based polymer (A), the PVA (A), or the PVA) satisfies or meets the following requirements 1 and 2:
requirement 1: the polyvinyl alcohol-based polymer has a polymerizable unsaturated bond, for example, a polymerizable unsaturated bond, e.g., an unsaturated double bond, as determined by bromate titration (or detected or quantified by bromate titration), and
requirement 2: when measured by thermogravimetry (when determined by thermogravimetry) in a temperature range of 150°C or more, a temperature at which a weight loss rate exceeds 0.5%/min is 255°C or more.

The present invention further includes various applications of the polyvinyl alcohol-based polymer (a polyvinyl alcohol-based polymer (A)). In particular, the present invention further includes a dispersing agent containing the polyvinyl alcohol-based polymer (the polyvinyl alcohol-based polymer (A)), in particular, a dispersion stabilizing agent containing the polyvinyl alcohol-based polymer, for example, a dispersion stabilizing agent for suspension polymerization containing the polyvinyl alcohol-based polymer.

In such various applications, for example, as a dispersing agent or a dispersion stabilizing agent, such as a dispersion stabilizing agent for suspension polymerization, the PVA-based polymer (A) may be a single type or a combination of two or more types.

The present invention will be described in detail below.

### Polyvinyl alcohol-based polymer (A)

The PVA-based polymer (A) typically satisfies the following requirements 1 and 2:
requirement 1: the polyvinyl alcohol-based polymer (A) has a polymerizable unsaturated bond, and
requirement 2: when measured by thermogravimetry (when determined by thermogravimetry) in a temperature range of 150°C or more, a temperature at which a weight loss rate exceeds 0.5%/min is 255°C or more.

In the requirement 1, the polymerizable unsaturated bond may include, for example, a double bond (an unsaturated double bond), a triple bond (an unsaturated triple bond), etc. The polymerizable unsaturated bond may typically be a double bond, in particular, a carbon-carbon double bond, and may include at least a double bond, in particular, a carbon-carbon double bond.

The amount of the polymerizable unsaturated bond in the PVA-based polymer (A) may be selected from the range of, for example, about 1 µmol/g or more, e.g., 2 µmol/g or more, and may preferably be 3 µmol/g or more, and more preferably 5 µmol/g or more, e.g., 8 µmol/g or more, 10 µmol/g or more, 12 µmol/g or more, 15 µmol/g or more, 20 µmol/g or more, etc.

The upper limit of the amount of the polymerizable unsaturated bond in the PVA-based polymer (A) may be, but is not limited to, for example, 3000 µmol/g or less, 2000 µmol/g or less, 1000 µmol/g or less, 800 µmol/g or less, 600 µmol/g or less, 500 µmol/g or less, 450 µmol/g or less, 400 µmol/g or less, etc.

The amount of the polymerizable unsaturated bond can be defined by an appropriate combination of the upper and lower limits as described above (hereinafter, the same applies to the definition of ranges).

Typically, the amount of the polymerizable unsaturated bond in the PVA-based polymer (A) may be about 1 to 2000 µmol/g, preferably about 3 to 1000 µmol/g, and more preferably about 5 to 500 µmol/g.

The polymerizable unsaturated bond in the PVA-based polymer (A), in particular, in the PVA-based polymer (A) satisfying the requirement 1, may be in an amount that satisfies the amount of the skeleton described later. For example, the polymerizable unsaturated bond in the PVA-based polymer (A) may be in an amount that satisfies the amount of an acetal skeleton (a) described later (the amount of the acetal skeleton (a) is, for example, 0.001 mol% or more, 0.05 to 5 mol%, 0.1 to 3 mol%, 0.2 to 2 mol%, etc. per monomer unit).

When the amount of the polymerizable unsaturated bond (e.g., an unsaturated double bond) is in the range described above, the effects of the present invention can be efficiently achieved. The amount of the polymerizable unsaturated bond is preferably not too small (e.g., 5 µmol/g or more etc.). The PVA-based polymer (A) containing such an amount of the polymerizable unsaturated bond, when used in suspension polymerization etc., exhibits excellent polymerization stability, prevents scale deposition to a polymerization vessel, prevents enlargement of the particle size of the resultant vinyl-based resin, and achieves other effects. The amount of the polymerizable unsaturated bond (e.g., an unsaturated double bond) is preferably not too large (e.g., 500 µmol/g or less etc.). The PVA-based polymer (A) containing such an amount of the polymerizable unsaturated bond facilitates the production of a vinyl-based resin with high plasticizer absorption and achieves other effects.

The polymerizable unsaturated bond contained in the PVA-based polymer (A), or the polymerizable unsaturated bond that the PVA-based polymer (A) has, can be detected or quantified by, for example, bromate titration or other methods to determine the amount or percentage of the polymerizable unsaturated bond. Bromate titration can be performed in any manner. Bromate titration utilizes a reaction between bromine and the polymerizable unsaturated bond (e.g., an unsaturated double bond) contained in the PVA-based polymer (A). The amount (µmol/g) of the polymerizable unsaturated bond (e.g., an unsaturated double bond) contained in the PVA-based polymer (A) can be calculated from the molar amount (mol) of the bromine that is reacted with the polymerizable unsaturated bond (e.g., unsaturated double bond) contained in the PVA-based polymer (A).

In the requirement 2, the temperature (T) at which the weight loss rate exceeds 0.5%/min is a measure indicating the thermal stability of the PVA-based polymer (A). When the temperature (T) is higher, the thermal stability is higher.

T is 255°C or more, preferably 258°C or more (e.g., 260°C or more), and more preferably 262°C or more (e.g., 264°C or more, or 265°C or more), or 267°C or more (e.g., 268°C or more, 269°C or more, 270°C or more), etc.

The upper limit of T may be, but is not limited to, for example, 450°C, 400°C, 350°C, 320°C, 300°C, 290°C, etc.

When the weight loss rate does not exceed 0.5% in the measurement temperature range of the thermogravimetric analysis, T can be defined as "above" the upper limit of the measurement temperature range (for example, when the upper limit of the measurement temperature range is 400°C, T is above 400°C).

When T is at such a temperature, the effects of the present invention can be efficiently achieved (for example, when such a PVA-based polymer is used for suspension polymerization, a vinyl-based resin with excellent thermal stability can be efficiently produced).

The requirement 2 (temperature T) can be efficiently satisfied by, but not limited to, adjusting (selecting) the composition or other characteristics of monomers in the PVA-based polymer (A), and/or by, e.g., adjusting (selecting) the method for introducing the polymerizable unsaturated bond, or adjusting (selecting) the drying conditions or other parameters, as described later.

The requirement 2 (the weight loss rate) can be determined by thermogravimetry (TG). The conditions (measuring conditions) of thermogravimetry are not particularly limited, and may include, for example, a predetermined rate of temperature rise (e.g., 10°C/min). Other conditions than the rate of temperature rise are also not limited, and can be selected as appropriate. For example, thermogravimetry may be performed under the conditions of a nitrogen atmosphere, a sample weight of 5 to 6 mg, and a measurement temperature range of 50°C or more (e.g., 50 to 300°C, 50 to 400°C, or 50 to 500°C). Other conditions may be selected as appropriate.

The PVA-based polymer (A) may be directly subjected to thermogravimetry as a sample to determine whether the PVA-based polymer (A) satisfies the requirement 2, or may be purified (e.g., by extraction) as needed and then subjected to thermogravimetry. For example, the PVA-based polymer (A) may be subjected to Soxhlet extraction using methanol as a solvent and then subjected to thermogravimetry (i.e., the PVA-based polymer (A) after extraction may be subjected to thermogravimetry).

The PVA-based polymer (A) may contain impurities such as sodium acetate. Such impurities may affect the measurement value of thermogravimetry. The impurities can be removed by extraction (using methanol) to perform efficient thermogravimetry (thermogravimetry of the PVA-based polymer (A) itself) (i.e., the influence from impurities can be excluded, and the thermal stability of the PVA-based polymer (A) itself can be easily measured). Even when impurities such as sodium acetate are included in the PVA-based polymer (A) used as a dispersing agent (a dispersion stabilizing agent), such impurities have no influence on the effects of the dispersing agent.

When the measurement sample (the PVA-based polymer (A)) has a large particle size, the sample may be pulverized using, for example, a pulverizer to adjust the particle size and then subjected to thermogravimetry.

The PVA-based polymer (A) is not particularly limited as long as the requirements 1 and 2 described above are satisfied. In an embodiment of the PVA-based polymer (A) having a polymerizable unsaturated bond (i.e., satisfying the requirement 1), the PVA-based polymer (A) may contain as appropriate an acetal skeleton (a) having a polymerizable unsaturated bond (e.g., an ethylenic unsaturated double bond).

According to the present invention, the PVA-based polymer (A) contains a polymerizable unsaturated bond, such as an ethylenic unsaturated double bond, e.g., an acetal skeleton (a) having a polymerizable unsaturated bond, such as an ethylenic unsaturated double bond, but yet exhibits excellent thermal stability, and when used for suspension polymerization, the PVA-based polymer (A) can yield a vinyl-based resin with excellent thermal stability, and achieves other effects.

### Acetal skeleton (a)

The number of polymerizable unsaturated bonds contained in the acetal skeleton (a) is, but not limited to, one or more, e.g., one to five, one to three, one or two, one.

The acetal moiety of the acetal skeleton (a) may be a cyclic acetal or an acyclic (linear) acetal, and may preferably be a cyclic acetal.

An exemplary acetal skeleton having a polymerizable unsaturated bond includes a skeleton (structural unit) represented by the formula (a1) shown below. The acetal skeleton (a) thus may include a skeleton represented by the formula (a1) shown below. 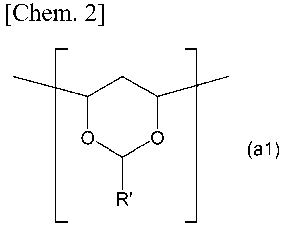 wherein R' represents a group having a polymerizable unsaturated bond.

In the formula (a1), R' is a group having a polymerizable unsaturated bond. R' itself may be a polymerizable unsaturated bond group, or R' may be a group having a polymerizable unsaturated bond, such as a hydrocarbon group.

The group having a polymerizable unsaturated bond may further contain a substituent. The substituent may be selected as appropriate depending on the type of group having a polymerizable unsaturated bond, and examples of the substituent include, but are not limited to, a hydroxy group, a halogen atom, an acyl group, an ester group, an alkoxy group, a nitro group, a substituted amino group, a group different from a group from which R' is derived (e.g., an aromatic group such as an aryl group), etc.

The substituent on R' may be a single type or a combination of two or more types.

Examples of the group having a polymerizable unsaturated bond, in particular, having a double bond, such as an ethylenic double bond, include groups having a single polymerizable unsaturated bond, including hydrocarbon groups (optionally substituted hydrocarbon groups) of 2 or more carbon atoms, e.g., about 2 to 30 carbon atoms, preferably about 2 to 14 carbon atoms, and more preferably about 2 to 10 carbon atoms, such as alkenyl groups, such as a vinyl group, an allyl group, a propenyl group (e.g., a 1-propenyl group or 2-propenyl group), a butenyl group, a pentenyl group, a 6-methyl-5-hexenyl group, a decenyl group, a 2-(dimethylamino)vinyl group, a cyclohexenyl group, or a 2-phenylethenyl group; and groups having two or more polymerizable unsaturated bonds, including hydrocarbon groups (optionally substituted hydrocarbon groups), such as alkapolyenyl groups, such as alkadienyl groups, for example, alkadienyl groups of 4 or more carbon atoms, e.g., about 4 to 30 carbon atoms, preferably about 4 to 14 carbon atoms, and more preferably about 4 to 10 carbon atoms, such as a 1,3-pentadienyl group, a 2,6-dimethyl-1,5-hexadienyl group, a cyclohexadienyl group, or a propenylcyclohexenyl group; alkatrienyl groups, for example, alkatrienyl groups of 6 or more carbon atoms, e.g., about 6 to 30 carbon atoms, and preferably about 6 to 24 carbon atoms; alkatetraenyl groups, for example, alkatetraenyl groups of 8 or more carbon atoms, e.g., about 8 to 30 carbon atoms, and preferably about 8 to 24 carbon atoms; alkapentaenyl groups, for example, alkapentaenyl groups of 10 or more carbon atoms, e.g., about 10 to 30 carbon atoms, and preferably about 10 to 24 carbon atoms; etc.

The acetal skeleton having a polymerizable unsaturated bond, for example, a group represented by the formula (a1) or represented by R'-< in the formula (a1), may be derived from a corresponding carbonyl compound, such as an aldehyde, an acetal thereof, a ketone, or the like, in particular, an aldehyde, such as R'CHO (an aldehyde where R' is a hydrocarbon group having a polymerizable unsaturated bond). The carbonyl compound may have a substituent as exemplified above.

Examples of such a carbonyl compound include unsaturated aldehydes (in particular, monoaldehydes) including alkenals, for example, alkenals of 3 to 15 carbon atoms, preferably 3 to 10 carbon atoms, such as acrolein, crotonaldehyde, methacrolein, 3-buthenal, 3-methyl-2-butenal, 2-methyl-2-butenal, 2-pentenal, 3-pentenal, 4-pentenal, 2-hexenal, 3-hexenal, 4-hexenal, 5-hexenal, 2-ethylcrotonaldehyde, 2-methyl-2-pentenal, 3-(dimethylamino)acrolein, 10-undecenal, myristoleic aldehyde, palmitoleic aldehyde, oleic aldehyde, elaidic aldehyde, vaccenic aldehyde, gadoleic aldehyde, erucic aldehyde, nervonic aldehyde, linoleic aldehyde, citronellal, or cinnamaldehyde; alkadienals, for example, alkadienals of 5 to 15 carbon atoms, preferably 5 to 10 carbon atoms, such as 2,4-pentadienal, 2,4-hexadienal, 2,6-nonadienal, citral, or perillaldehyde; alkatrienals, for example, alkatrienals of 7 to 30 carbon atoms, preferably 7 to 25 carbon atoms, such as linolenic aldehyde or eleostearic aldehyde; alkatetraenals, for example, alkatetraenals of 9 to 30 carbon atoms, preferably 9 to 25 carbon atoms, such as stearidonic aldehyde or arachidonic aldehyde; and alkapentaenals, for example, alkapentaenals of 11 to 30 carbon atoms, preferably 11 to 25 carbon atoms, such as eicosapentaenoic aldehyde; and corresponding ketones, acetals, or the like.

When the carbonyl compound can exist as isomers, e.g., cis and trans isomers, the carbonyl compound includes any isomers, e.g., cis and trans isomers.

The carbonyl compound may be an acetal, which is a condensation product of an aldehyde and an alcohol, as described above. The acetal may be, but is not limited to, a condensation product of an aldehyde and a primary alcohol, e.g., methanol.

The carbonyl compound may be a single type or a combination of two or more types.

The carbonyl compound may preferably be a monocarbonyl compound, such as a monoaldehyde, to achieve appropriate water solubility and other properties. When a polyvalent carbonyl compound, such as a polyvalent aldehyde, such as a dialdehyde, is used, the polyvalent carbonyl compound is used in such an amount that sufficient water solubility or other properties can be ensured. For example, the polyvalent carbonyl compound is used in a reduced amount.

The acetal skeleton having a polymerizable unsaturated bond, for example, an acetal skeleton represented by the formula (a1), may be a skeleton that can be introduced via a hydroxy group, and may be, for example, an acetal skeleton derived from (introduced via) two adjacent hydroxy groups, for example, hydroxy groups of vinyl alcohol units.

For example, when a carbonyl compound (such as an aldehyde or a ketone) having a polymerizable unsaturated bond is used, two adjacent OH groups in a PVA-based polymer can be acetalized with the carbonyl compound having a polymerizable unsaturated bond to give a PVA-based polymer (A) having the acetal skeleton (a) having a polymerizable unsaturated bond.

The acetal skeleton having a polymerizable unsaturated bond, for example, an acetal skeleton represented by the formula (a1), may or may not have an ionic group (an ionic skeleton).

The PVA-based polymer (A) may have a single type of acetal skeleton having a polymerizable unsaturated bond or a combination of two or more types of acetal skeletons having a polymerizable unsaturated bond.

The amount of the acetal skeleton (a) or polymerizable unsaturated bonds in the PVA-based polymer (A), for example, the amount of a skeleton represented by the formula (a1) in the PVA-based polymer (A), may be selected from the range of about 0.001 mol% or more, e.g., 0.005 mol% or more, per monomer unit in the PVA-based polymer (A), and may be, for example, 0.01 mol% or more, preferably 0.05 mol% or more, more preferably 0.1 mol% or more, and especially preferably 0.2 mol% or more per monomer unit in the PVA-based polymer (A), and may be 10 mol% or less, for example, 8 mol% or less, for example, 5 mol% or less, 3 mol% or less, preferably 2 mol% or less, and more preferably 1 mol% or less per monomer unit in the PVA-based polymer (A).

The range of the amount may be selected from appropriate combinations of these ranges (the upper and lower limits), and may be, for example, 0.01 to 3 mol%, 0.05 to 5 mol%, or the like.

Specifically, the amount of the acetal skeleton (a) or polymerizable unsaturated bonds in the PVA-based polymer (A) may be about 0.05 to 5 mol%, preferably about 0.1 to 3 mol%, and more preferably about 0.2 to 2 mol% per monomer unit in the PVA-based polymer (A).

The amount "1 mol%" means that one acetal skeleton (a) (e.g., a skeleton represented by the formula (a1)) is contained in 100 monomer units (e.g., of the total of monomer units, such as vinyl alcohol units or vinyl ester units).

When the acetal skeleton is in such an amount, the PVA-based polymer (A) can efficiently achieve the functions as a dispersing agent (a dispersion stabilizing agent) (for example, the PVA-based polymer (A) will have excellent polymerization stability, an appropriate average particle size, and other properties, and can efficiently yield a vinyl chloride-based resin with excellent plasticizer absorption and other properties).

The upper limit of the amount of the acetal skeleton (a) should not be excessively high so that the PVA-based polymer (A) is easily prepared as an aqueous solution, has storage stability, and is easily dispersed in hot water.

The amount of the acetal skeleton (a) contained in the PVA-based polymer (A) can be measured by any method, and can be measured using, for example, NMR.

Specifically, for example, the amount of the acetal skeleton (a) contained in the PVA-based polymer (A) may be measured by dissolving the PVA-based polymer (A) in d6-DMSO solvent, then subjecting the solution to measurement by ¹H-NMR, and analyzing a signal derived from a polymerizable unsaturated bond (e.g., an ethylenic double bond) of the acetal skeleton (a).

The PVA-based polymer (A) may contain an ionic skeleton (b). When the PVA-based polymer (A) contains the ionic skeleton (b), the PVA-based polymer (A) can be easily prepared as an aqueous PVA solution, and the resulting aqueous PVA solution has high stability, and even has high dispersibility in hot water. Such an aqueous PVA solution is less prone to precipitation when the aqueous PVA solution is stored in a tank etc. or added to a polymerization vessel (containing hot water at 40 to 70°C). By introducing the ionic skeleton (b) into the PVA-based polymer (A), such effects, for example, high dispersibility (e.g., in water or hot water) can be achieved, but the simple introduction of the ionic skeleton (b) may reduce the thermal stability. According to the present invention, even when the ionic skeleton (b) is introduced into the PVA-based polymer (A), the requirement (2) is satisfied, thereby achieving high dispersibility and other properties and simultaneously efficiently improving the thermal stability of the resulting resin (i.e., imparting sufficient thermal stability to the resulting resin).

### Ionic skeleton (b)

The ionic skeleton (b) has an ionic group.

Examples of the ionic group include anionic groups, such as acid groups, e.g., a carboxyl group, a sulfonic acid group (-SO₃H), or a phosphoric acid group; cationic groups, such as an amino group, or ammonium (an ammonium cation); and salts thereof (salt groups formed from these groups).

Examples of the salts, although depending on whether the ionic group is anionic or cationic or other properties, include, metal salts including alkali metal salts and alkaline earth metal salts, such as lithium salts, sodium salts, potassium salts, magnesium salts, calcium salts; halides, such as chlorides, bromides, and iodides; and the like.

When the ionic group is a polybasic acid or the like, the salts may be a single type (the same type) or a combination of two or more types.

Among these ionic groups, preferred are acid groups, in particular, a carboxyl group and a sulfonic acid group, and salts thereof, in particular, salts of acid groups, such as carboxylic acid salts, such as -COOM, where M is an alkali metal such as sodium or a cation thereof, or sulfonic acid salt, such as -SO₃M, where M is an alkali metal such as sodium or a cation thereof.

Embodiments of the ionic skeleton (b) are not limited as long as the ionic skeleton (b) has an ionic group. The ionic skeleton (b) may be, for example, (1) an acetal skeleton (an acetal group, or an acetal unit) having an ionic group; (2) a skeleton corresponding to (or derived from) a monomer having an ionic group; (3) other skeletons corresponding to (or derived from) compounds capable of introducing an ionic group, for example, a chain transfer agent having an ionic group, such as an alcohol, a carbonyl compound (such as an aldehyde or a ketone, especially an aldehyde), a thiol, or the like; among others.

The ionic skeleton (b) (or a single ionic skeleton (b)) may have a single type of ionic group or two or more types of ionic groups.

The PVA-based polymer (A) may contain a single type of ionic skeleton (b) or a combination of two or more types of ionic skeletons (b).

The amount (percentage, or percentage of the amount) of the ionic skeleton (b), e.g., the skeletons (1), (2) and/or (3), contained in the PVA-based polymer (A) may be selected from the range of about 0.001 mol% or more, e.g., 0.005 mol% or more, per monomer unit, and may be, for example, 0.01 mol% or more, preferably 0.03 mol% or more, and more preferably 0.05 mol% or more, etc. per monomer unit, and may be 10 mol% or less, e.g., 8 mol% or less, e.g., 5 mol% or less, or 3 mol% or less, preferably 2 mol% or less, and more preferably 1 mol% or less per monomer unit.

Specifically, the amount of the ionic skeleton (b), e.g., the skeletons (1), (2) and/or (3), contained in the PVA-based polymer (A) may be about 0.01 to 5 mol%, preferably about 0.03 to 2 mol%, and more preferably about 0.05 to 1 mol% per monomer unit.

The amount "1 mol%" means that one ionic skeleton (b) (e.g., the skeletons (1), (2) and/or (3)) is contained in 100 monomer units (e.g., of the total of monomer units, such as vinyl alcohol units or vinyl ester units).

When the ionic skeleton (b) is in such an amount, the PVA-based polymer (A) is more easily prepared as an aqueous solution, has improved storage stability, and is more easily dispersed in hot water.

The upper limit of the amount of the ionic skeleton (b) should not be excessively high so that the PVA-based polymer (A) can efficiently achieve the function as a dispersion stabilizing agent (for example, the PVA-based polymer (A) will have excellent polymerization stability, an appropriate average particle size, and other properties, and can efficiently yield a vinyl chloride-based resin with excellent plasticizer absorption and other properties).

The method for measuring the amount of ionic groups contained in the PVA-based polymer (A) may be selected depending on the type of skeleton that has an ionic group or other factors, and may be any method including, but not limited to, for example, NMR, titration, UV absorbance, etc.

Specifically, for example, the amount of a skeleton represented by the formula (b1-1) described later contained in the PVA-based polymer (A) may be measured by dissolving the PVA-based polymer (A) in d6-DMSO solvent, then subjecting the solution to measurement by ¹H-NMR, and analyzing a signal derived from a substituent (e.g., hydrogen) on the benzene ring.

Alternatively, the amount of carboxyl groups in the PVA-based polymer (A) can be determined by completely saponifying the PVA-based polymer (A), subjecting the saponified PVA-based polymer (A) to Soxhlet extraction to remove, for example, sodium acetate, dissolving the extracted sample in water, adding a small amount of sodium hydroxide (NaOH), and subjecting the sample to conductometric titration with diluted hydrochloric acid to measure the amount of hydrochloric acid used for the titration.

When the acetal skeleton having an ionic group has a structure that absorbs UV (ultraviolet rays), the amount of the acetal skeleton having an ionic group contained in the PVA-based polymer (A) can be determined by measuring the UV absorbance of an aqueous solution containing the PVA-based polymer (A).

The amount of the acetal skeleton (a) (per monomer unit) in the PVA-based polymer (A) may be 50 mol or less, for example, 30 mol or less, or 20 mol or less, preferably 15 mol or less, more preferably 10 mol or less per mol of the ionic skeleton (b) (e.g., the skeletons (1), (2) and/or (3) described above), and may be 0.05 mol or more, for example, 0.1 mol or more or 0.5 mol or more, preferably 1 mol or more, more preferably 2 mol or more, or especially 3 mol or more per mol of the ionic skeleton (b) (e.g., the skeletons (1), (2) and/or (3) described above).

When the amount of the acetal skeleton (a) is in such an amount, the PVA-based polymer (A) is more easily prepared as an aqueous solution, and has excellent storage stability, as well as exhibits an excellent function as a dispersion stabilizing agent.

The ionic skeleton (b) may be introduced by various known methods selected depending on the embodiments of the ionic skeleton (b). The methods for introducing the ionic skeleton (b) may include, for example, (1) a method in which a PVA-based polymer (may referred to as a PVA-based polymer (C)) is acetalized with a carbonyl compound (e.g., an aldehyde, an acetal thereof, a ketone, etc., especially an aldehyde) having an ionic group to give a PVA-based polymer (B-1) having an ionic group; (2) a method in which a monomer having an ionic group is copolymerized with a vinyl ester to prepare a polyvinyl ester-based polymer having an ionic group, and then the polyvinyl ester-based polymer is saponified to give a PVA-based polymer (B-3) having an ionic group; (3) a method in which a vinyl ester is polymerized in the presence of a chain transfer agent (such as an alcohol, an aldehyde, or a thiol) having an ionic group to prepare a polyvinyl ester-based polymer having an ionic group, and the polyvinyl ester-based polymer is saponified to give a PVA-based polymer (B-4) having an ionic group; and other methods.

Each of the embodiments of the ionic skeleton (b) will be described in detail below.

### (1) Acetal skeleton having ionic group

An ionic group is present in the acetal skeleton (or the acetal group, or the acetal unit) as described above (i.e., the ionic group is a substituent on the acetal skeleton).

The acetal moiety may be a cyclic acetal or an acyclic (linear) acetal, and may preferably be a cyclic acetal.

An exemplary acetal skeleton having an ionic group includes a skeleton (structural unit) represented by the formula (b1) shown below. The acetal skeleton having an ionic group thus may include a skeleton represented by the formula (b1) shown below. 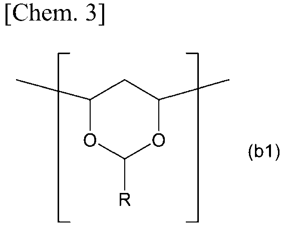 wherein R is a group having an ionic group.

In the above formula (b1), R is a group having an ionic group. R itself may be an ionic group, or R may be a linking group having an ionic group, i.e., a group composed of an ionic group and a linking group substituted with the ionic group.

Examples of the linking group (i.e., a group substituted with the ionic group) include hydrocarbon groups. Examples of the hydrocarbon groups include aliphatic hydrocarbon groups including saturated aliphatic hydrocarbon groups such as alkyl groups, including linear alkyl groups, e.g., C₁₋₃₀ alky groups, such as a methyl, ethyl, propyl, butyl, pentyl, hexyl, heptyl, octyl, nonyl, decyl, or undecyl group, and cycloalkyl groups, e.g., C₃₋₁₀ cycloalkyl groups, such as a cyclopentyl or cyclohexyl group; and aromatic hydrocarbon groups including aryl groups, e.g., C₆₋₂₀ aryl groups, such as a phenyl, tolyl, xylyl, or naphthyl group, and aralkyl groups, e.g., C₆₋₂₀ aryl C₁₋₄ alkyl groups, such as a benzyl or phenethyl group); etc.

The linking group (such as a hydrocarbon group) may have a substituent (other than an ionic group) in addition to the ionic group. Examples of the substituent include, but are not limited to, a hydroxy group, a halogen atom, an acyl group, an ester group, an alkoxy group, a nitro group, a group different from a group from which the linking group is derived (e.g., an aromatic group such as an aryl group), etc.

The substituent on the linking group (such as a hydrocarbon group) may be a single type or a combination of two or more types.

The number of ionic groups present in the linking group (such as a hydrocarbon group) having an ionic group is at least one, and two or more ionic groups may be present in the linking group.

Specific examples of the acetal skeleton having an ionic group, i.e., a skeleton represented by the formula (b1), include a skeleton represented by the formula (b1) in which R is an ionic group, e.g., a carboxyl group or a salt thereof, and a skeleton represented by the following formula (b1-1): 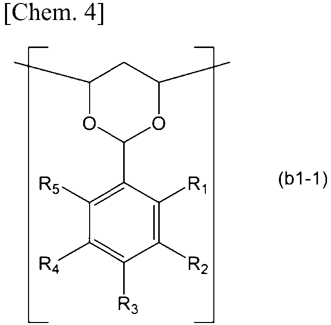 wherein R₁ to R₅ each represent a hydrogen atom or a substituent, wherein at least one of R₁ to R₅ is an ionic group.

The ionic group and the substituent present in the formula (b1-1) may be any one of those exemplified above. At least one of R₁ to R₅ is an ionic group, and preferably one of R₁ to R₅ may be an ionic group. Typically, any one of R₁ to R₅ may be an ionic group (e.g., a carboxyl group, a sulfonic acid group, or a salt thereof) and the remaining four substituents may be hydrogen atoms.

The acetal skeleton having an ionic group, for example, a group represented by the formula (b1) or represented by R'-< in the formula (b1), may be derived from a corresponding carbonyl compound, such as an aldehyde, an acetal thereof, a ketone, or the like, in particular, an aldehyde, such as RCHO. The carbonyl compound may have a substituent.

Examples of such a carbonyl compound include aldehydes (in particular, monoaldehydes) including alkanals having an ionic group, e.g., alkanals having an acid group or a salt thereof, such as glyoxylic acid, formyl acetate, formyl propionate, or salts thereof; arene carboxaldehydes having an ionic group, e.g., arene carboxaldehydes having an acid group or a salt thereof, such as formylbenzoic acid (such as 4-formylbenzoic acid), formylbenzenesulfonic acid (such as 2-formylbenzenesulfonic acid or 4-formylbenzene-1,3-disulfonic acid), or salts thereof; and corresponding ketones, acetals, or the like.

When the carbonyl compound can exist as isomers, e.g., cis and trans isomers, the carbonyl compound includes any isomers, e.g., cis and trans isomers.

When an ionic group can be formed in the PVA-based polymer (A), the ionic group present in the carbonyl compound may be derivatized (e.g., modified by esterification or anhydration).

For example, an ester (e.g., an alkyl ester) or an acid anhydride can be used when the ester or the acid anhydride can produce the corresponding acid group (the corresponding carboxyl or sulfonic acid group) or a salt thereof via, e.g., hydrolysis in the PVA-based polymer (A) (hereinafter, the same applies to an ionic group).

The carbonyl compound may be a single type or a combination of two or more types.

The carbonyl compound may preferably be a monocarbonyl compound, such as a monoaldehyde, to achieve appropriate water solubility and other properties. When a polyvalent carbonyl compound, such as a polyvalent aldehyde, such as a dialdehyde, is used, the polyvalent carbonyl compound is used in such an amount that sufficient water solubility or other properties can be ensured. For example, the polyvalent carbonyl compound is used in a reduced amount.

The acetal skeleton having an ionic group, for example, an acetal skeleton represented by the formula (b1), may be a skeleton that can be introduced via a hydroxy group, and may be, for example, an acetal skeleton derived from (introduced via) two adjacent hydroxy groups, for example, hydroxy groups of vinyl alcohol units.

For example, when a carbonyl compound (such as an aldehyde or a ketone) having an ionic group is used, two adjacent OH groups in a PVA-based polymer can be acetalized with the carbonyl compound having an ionic group to give a PVA-based polymer (A) having the acetal skeleton having an ionic group.

The acetal skeleton having an ionic group, for example, an acetal skeleton represented by the formula (b1), may or may not have a polymerizable unsaturated bond.

The PVA-based polymer (A) may or may not have the acetal skeleton having an ionic group.

The PVA-based polymer (A) may have a single type of acetal skeleton having an ionic group or a combination of two or more types of acetal skeletons having an ionic group.

The method for adding (or introducing) the acetal skeleton having an ionic group, such as the acetal skeleton having a carboxyl group, a sulfonic acid group or a salt thereof to the PVA-based polymer (A), is not limited to a particular one and may be performed by a conventional procedure.

In a typical method, a PVA-based polymer (C) may be acetalized with a carbonyl compound having an ionic group, such as an aldehyde, an acetal thereof, a ketone, or the like having an ionic group, as described later.

A PVA-based polymer (B-1) having an ionic group can be obtained by subjecting a PVA-based polymer (C) to acetalization with a carbonyl compound having an ionic group. This acetalization process is preferably performed in the co-presence of a carbonyl compound having a polymerizable unsaturated bond to directly give the PVA-based polymer (A) having the acetal skeleton (a) and an ionic group.

Examples of the aldehyde having an ionic group include glyoxylic acid, 2-formylbenzoic acid, 4-formylbenzoic acid, sodium 2-formylbenzenesulfonate, sodium 4-formylbenzenesulfonate, disodium 4-formylbenzene-1,3-disufonate, etc. Preferred are 4-formylbenzoic acid, sodium 2-formylbenzenesulfonate, or the like.

The carbonyl compound may be an acetal, which is a condensation product of an aldehyde and an alcohol, as described above. The acetal may be, but is not limited to, a condensation product of an aldehyde and a primary alcohol, e.g., methanol.

The carbonyl compound may be a single type or a combination of two or more types.

### (2) Skeleton corresponding to monomer having ionic group

The monomer having an ionic group is not limited to a particular one and may be selected as appropriate for the type of ionic group.

Specific examples of the monomer include monomers having an acid group, including monomers having a carboxyl group, such as monocarboxylic acids such as aliphatic unsaturated monocarboxylic acids (such as acrylic acid, methacrylic acid, or crotonic acid) or polycarboxylic acids such as aliphatic unsaturated dicarboxylic acids (such as itaconic acid, maleic acid, or fumaric acid) and salts thereof; monomers having a sulfonic acid group, such as alkenyl sulfonic acids (such as vinylsulfonic acid or allylsulfonic acid), alkenylarene sulfonic acids (such as styrene sulfonic acid), amide-based monomers having a sulfonic acid group (such as 2-acrylamide-2-methylpropanesulfonic acid) and salts thereof; monomers having an ionic group other than those above, e.g., monomers having an amino group, such as (meth)acrylamide propyl dimethylamine, and salts thereof; etc.

These monomers may be derivatives, for example, an acid anhydride (such as maleic anhydride) or an ester (such as an alkyl ester) as long as the derivatives can introduce an ionic group into the PVA-based polymer (A), for example, as long as the derivatives can eventually generate an ionic group in the PVA-based polymer (A) by hydrolysis or the like.

Such derivatives may also be referred to as derivatives capable of forming an ionic group. In a specific example, an acrylic ester may be used as long as the acrylic ester can introduce an acrylic acid or a salt thereof into the PVA-based polymer (A) as a final product. When an acrylic ester is used, the acrylic ester introduces a skeleton corresponding to an acrylic acid or a salt thereof into the PVA-based polymer (A).

The above monomers may be a single type or a combination of two or more types.

For example, such a monomer having an ionic group is copolymerized with a vinyl ester to prepare a polyvinyl ester-based polymer having an ionic group, and then the polyvinyl ester-based polymer is saponified to give a PVA-based polymer (B-3) having an ionic group, as described above.

### (3) Other skeletons corresponding to compounds capable of introducing ionic group

When referring to the skeletons (3), the compounds capable of introducing an ionic group may be, for example, alcohols having an ionic group, carbonyl compounds (such as aldehydes or ketones, especially aldehydes) having an ionic group, thiols having an ionic group, or the like, as described above. In general, these compounds may also function as chain transfer agents.

Among these compounds, thiols are preferred due to their high chain transferring ability and other properties, which facilitate the introduction of an ionic group.

Examples of the thiols having an ionic group include thiols having an acid group, including, for example, thiols having a carboxyl group, such as mercapto saturated fatty acids, such as mercaptoalkanoic acids, such as 3-mercaptopropionic acid or mercaptosuccinic acid; thiols having a sulfonic acid group, such as mercapto alkane sulfonic acids, such as 3-mercapto-1-propanesulfonic acid, or salts thereof, such as sodium 3-mercapto-1-propanesulfonate; and the like.

For example, a vinyl ester is polymerized in the presence of such a chain transfer agent (such as an alcohol, an aldehyde, or a thiol) having an ionic group to prepare a vinyl ester-based polymer having an ionic group derived from the chain transfer agent at its terminals, as described above. The vinyl ester-based polymer can then be saponified to give a PVA-based polymer (B-4) having an ionic group at its terminals.

The PVA-based polymer (A) may have an additional acetal skeleton (or an additional acetal group or an additional acetal unit) that does not belong to the scope of the acetal skeleton (a) or the acetal skeleton having an ionic group.

Such an additional acetal skeleton may be a skeleton represented by the formula (a1) wherein R' is a group that lacks an ionic group or a polymerizable unsaturated bond (e.g., an aliphatic group, an aromatic group, or the like that lacks an ionic group or a polymerizable unsaturated bond). Examples of such a group include aliphatic groups, including alkyl groups, e.g., C₁₋₃₀ alkyl groups, such as a methyl, ethyl, propyl, butyl, pentyl, hexyl, heptyl, octyl, nonyl, decyl, or undecyl group; cycloalkyl groups, e.g., C₃₋₂₀ cycloalkyl groups, such as a cyclopentyl or cyclohexyl group; aromatic groups, including aryl groups, e.g., C₆₋₂₀ aryl groups, such as a phenyl or naphthyl group; etc.

The method for introducing such an additional acetal skeleton is not limited to a particular one and may be performed by a conventional procedure. For example, the PVA-based polymer (C) may be acetalized with an aldehyde corresponding to the additional acetal skeleton. When the additional acetal skeleton is introduced in this manner, the additional acetal skeleton is typically formed from two adjacent vinyl alcohol units.

Examples of such an aldehyde include aliphatic aldehydes, including alkanals, such as acetaldehyde, propionaldehyde, butanal, pentanal, hexanal, heptanal, octanal, nonanal, decanal, undecanal, dodecanal, 2-methylbutanal, 2-ethylbutanal, 2-methylpentanal, or 2-ethylhexanal, or cycloalkane carbaldehydes, such as cyclopentane carboxyaldehyde (cyclopentane carbaldehyde) or cyclohexane carboxyaldehyde (cyclohexane carbaldehyde); aromatic aldehydes, including arene carbaldehydes, such as benzaldehyde, or naphthaldehyde; etc.

The PVA-based polymer (A) has at least vinyl alcohol units, but may have vinyl alcohol units and non-hydrolyzed units (non-saponified units) (e.g., vinyl ester units, or units derived from a vinyl ester-based monomer, such as a vinyl acetate units).

The PVA-based polymer (A), if necessary, may further have an additional unit, for example, a unit other than those described above, for example, a unit other than vinyl alcohol units, non-hydrolyzed units, the acetal skeleton (a), the ionic skeleton (b), or the like. Examples of such an additional unit include a unit derived from another monomer, as exemplified in the section of the PVA-based polymer (C) described later.

The degree of saponification of the PVA-based polymer (A) may be, for example, 20 mol% or more, e.g., 25 mol% or more, preferably 30 mol% or more, e.g., 35 mol% or more, and further preferably 40 mol% or more, e.g., 45 mol% or more, or especially 50 mol% or more, e.g., 55 mol% or more or 60 mol% or more.

The upper limit of the degree of saponification of the PVA-based polymer (A) may be, for example, 95 mol% or less, e.g., 93 mol% or less, preferably 90 mol% or less, e.g., 88 mol% or less, and more preferably 85 mol% or less, e.g., 80 mol% or less.

Specifically, the degree of saponification of the PVA-based polymer (A) may be, for example, about 20 to 90 mol%, e.g., 50 to 90 mol%, preferably about 55 to 85 mol%, and further preferably about 60 to 80 mol%.

The degree of saponification is preferably not excessively low so that an aqueous solution of the PVA-based polymer (A) is easily prepared, and the PVA-based polymer (A) achieves excellent storage stability and excellent dispersibility in hot water. The degree of saponification is preferably not excessively high to facilitate the achievement of an excellent function as a dispersing agent (for example, the PVA-based polymer (A) will have high polymerization stability, an appropriate average particle size, and other properties, and can efficiently yield a vinyl chloride-based resin with high plasticizer absorption).

The degree of saponification can be determined by, for example, the measuring method for the degree of saponification of PVAs specified in JIS K 6726.

When the PVA-based polymer (A) has vinyl ester units, the amount of the ionic skeleton (b) (in terms of monomer units) may be 10 mol or less, preferably 5 mol or less, and further preferably 3 mol or less relative to 100 mol of vinyl ester units, and may be 0.01 mol or more, e.g., 0.05 mol or more, or 0.1 mol or more, preferably 0.2 mol or more, and more preferably 0.3 mol or more relative to 100 mol of vinyl ester units.

When the ionic skeleton (b) in the PVA-based polymer (A) is in such an amount, an aqueous solution of the PVA-based polymer (A) is easily prepared and excellent storage stability is achieved, and at the same time, the PVA-based polymer (A) exhibits an excellent function as a dispersion stabilizing agent.

The viscosity of a 4% by mass aqueous solution of the PVA-based polymer (A) at 20°C can be selected from the range of, but not limited to, for example, about 1 mPa·s or more, e.g., 1.5 mPa·s or more, and may be 2 mPa·s or more, e.g., 2.2 mPa·s or more, preferably 2.5 mPa·s or more, e.g., 2.7 mPa·s or more, and more preferably 3 mPa·s or more, e.g., 3.2 mPa·s or more, 3.4 mPa·s or more, 3.6 mPa·s or more, etc.

The upper limit of the viscosity of a 4% by mass aqueous solution of the PVA-based polymer (A) at 20°C may be selected from the range of, but not limited to, for example, about 2000 mPa or less, e.g., 1500 mPa·s or less, 1000 mPa·s or less, or 500 mPa·s or less, and may typically be selected from the range of about 300 mPa·s or less, e.g., 250 mPa·s or less, 200 mPa·s or less, 150 mPa·s or less, 120 mPa·s or less, 100 mPa·s or less, 80 mPa·s or less, or 50 mPa·s or less, or may be 30 mPa·s or less, e.g., 20 mPa·s or less, preferably 15 mPa·s or less, e.g., 10 mPa·s or less, and more preferably 9 mPa·s or less, e.g., 8 mPa·s or less, etc.

Specifically, the viscosity of a 4% by mass aqueous solution of the PVA-based polymer (A) at 20°C may be, for example, about 1 to 500 mPa·s, e.g., 2 to 300 mPa·s, 1 to 100 mPa·s, 2 to 100 mPa·s, or 2.5 to 30 mPa·s, and may be about 20 mPa·s or less, e.g., 3 to 15 mPa·s, 3.2 to 10 mPa·s, 3.4 to 9 mPa·s, or 3.6 to 8 mPa·s.

The (average) degree of polymerization of the PVA-based polymer (A) may be, but is not limited to, e.g., 100 or more, e.g., 120 or more, preferably 150 or more, e.g., 160 or more, and more preferably 180 or more, e.g., 200 or more, 220 or more, 250 or more, 280 or more, 300 or more, etc.

The upper limit of the (average) degree of polymerization of the PVA-based polymer (A) may be, but is not limited to, for example, selected from the range of about 10000 or less, e.g., 8000 or less, or 5000 or less, and may be 3000 or less, e.g., 2500 or less, preferably 2000 or less, e.g., 1500 or less, and more preferably 1000 or less, e.g., 800 or less.

Specifically, the (average) degree of polymerization of the PVA-based polymer (A) may be, for example, about 120 to 3000, e.g., 200 to 2000, preferably about 250 to 1500, and more preferably about 300 to 1000.

The viscosity of a 4% by mass aqueous solution of the PVA-based polymer (A) and the degree of polymerization of the PVA-based polymer (A) are advantageously not excessively small to achieve polymerization stability, inhibit scale deposition, prevent the enlargement of the resulting vinyl-based resin, and achieve other advantages. The viscosity of a 4% by mass aqueous solution of the PVA-based polymer (A) and the degree of polymerization of the PVA-based polymer (A) are advantageously not excessively large to achieve easy preparation of an aqueous solution, achieve excellent storage stability, achieve excellent dispersibility in hot water, and achieve other advantages.

The viscosity of a 4% by mass aqueous solution of the PVA-based polymer (A) at 20°C is determined by, for example, the method specified in JIS K 6726. The degree of polymerization of the PVA-based polymer (A) may be determined by, for example, the method specified in JIS K 6726. The degree of polymerization may be a calculation value (or converted value) based on other analytical methods (for example, may be a value calculated based on (or converted from) the viscosity of a 4% by mass aqueous solution of the PVA-based polymer (A)).

The cloud point of a 4% by mass aqueous solution of the PVA-based polymer (A) is preferably, for example, 20°C or more, e.g., more than 20°C, 22°C or more, 23°C or more, 24°C or more, or 25°C or more, and more preferably 27°C or more, and may be 30°C or more, etc.

The upper limit of the cloud point of a 4% by mass aqueous solution of the PVA-based polymer (A) may be, but is not limited to, for example, 75°C, 70°C, 65°C, 60°C, 55°C, 50°C, etc.

The cloud point of a 4% by mass aqueous solution of the PVA-based polymer (A) may typically be, for example, 25 to 50°C, etc.

The PVA-based polymer (A) having such a cloud point is easily prepared as an aqueous solution, and has excellent storage stability.

The cloud point of a 4% by mass aqueous solution of the PVA-based polymer (A) can be adjusted by adjusting the degree of saponification, the degree of polymerization, the amount of the ionic skeleton (ionic groups), etc. of the PVA-based polymer (A).

### Aqueous liquid

The PVA-based polymer (A) may be directly used as a dispersion stabilizing agent (a dispersing agent) or the like, or may be dissolved in water and then used as an aqueous liquid.

The aqueous liquid according to the present invention is only required to contain the PVA-based polymer (A) and water. The aqueous liquid contains, for example, the PVA-based polymer (A) as a dispersoid that is dispersed or dissolved in water.

The amount of the PVA-based polymer (A) contained in the aqueous liquid may be, but is not limited to, for example, about 1% by mass or more, e.g., 2% by mass or more, or 3% by mass or more, and may be about 80% by mass or less, e.g., 70% by mass or less, 60% by mass or less, 50% by mass or less, 40% by mass or less, or 30% by mass or less.

The aqueous liquid of the present invention has good stability.

The aqueous liquid may further contain a water-soluble organic solvent or the like to improve the shelf stability. Examples of the water-soluble organic solvent include alcohols, such as methanol, ethanol, n-propanol, isopropanol, n-butanol, or isobutanol; esters, such as methyl acetate or ethyl acetate; and glycol derivatives, such as ethylene glycol, ethylene glycol monomethyl ether, or ethylene glycol monoethyl ether; etc. These organic solvents may be a combination of two or more types.

When the aqueous liquid contains a water-soluble organic solvent, the amount of the water-soluble organic solvent is, for example, 70% by mass or less, e.g., 60% by mass or less, preferably 50% by mass or less, and more preferably 30% by mass or less relative to the total amount of the solvent. In particular, to address the environmental concerns and improve the workability, the amount of the organic solvent may preferably be 5% by mass or less relative to the total amount of the solvent or the aqueous liquid.

### Production method

The production method of the PVA-based polymer (A) is not particularly limited in the present invention. For example, a PVA-based polymer (A-1) can be produced by acetalizing a PVA-based polymer (C) with an aldehyde having a polymerizable unsaturated bond, or the like.

When an ionic group is introduced into the PVA-based polymer (A), simultaneous acetalization reactions of a PVA-based polymer (C) (having no ionic group) with a carbonyl compound (e.g., a monoaldehyde) having a polymerizable unsaturated bond and with a carbonyl compound (e.g., an aldehyde) having an ionic group can be performed to give a PVA-based polymer (A-2) containing an ionic group.

Alternatively, an acetalization reaction can be performed between a PVA-based polymer having an ionic group (B-3 or B-4) and a carbonyl compound (e.g., a monoaldehyde) having a polymerizable unsaturated bond to give a PVA-based polymer containing an ionic group (A-3 or A-4).

Thus, the production of a PVA-based polymer (A-1, A-2, A-3, or A-4) involves, for example, the following two steps:
producing a PVA-based polymer (C) or a PVA-based polymer having an ionic group (B-3 or B-4), and
acetalizing the PVA-based polymer (acetalization step).

The production methods of the PVA-based polymer (C) or the PVA-based polymer containing an ionic group (B-3 or B-4) are not particularly limited and may be performed in accordance with a conventionally known method.

The PVA-based polymer having an ionic group (B-3 or B-4) and the PVA-based polymer (C) as well as the acetalization step will be described in detail below.

### PVA-based polymers (B-3), (B-4), and (C)

The PVA-based polymer (C) may be, but is not limited to, for example, a PVA-based polymer obtained by saponification (reaction) of a vinyl ester-based polymer (i.e., a saponified product of a vinyl ester-based polymer (a polymer polymerized from a vinyl ester-based monomer as a polymerization component)).

The PVA-based polymers (B-3) and (B-4) can be obtained in the same manner as in the production of the PVA-based polymer (C) except using, for example, another monomer including a monomer containing an ionic group, or using a chain transfer agent including a chain transfer agent having an ionic group, as described later.

The vinyl ester-based polymer can be obtained by polymerization of at least a vinyl ester-based monomer (by polymerizing at least the vinyl ester-based monomer as a polymer component). The polymerization may be performed in accordance with a conventionally known method, and the polymerization method includes, for example, but is not limited to, bulk polymerization, solution polymerization, suspension polymerization, emulsion polymerization, or the like. For ease of controlling the degree of polymerization or performing a saponification reaction after polymerization, preferred polymerization methods are, but not limited to, solution polymerization using methanol as a solvent, or suspension polymerization using water or water/methanol as a dispersion medium.

Examples of the vinyl ester-based monomer that can be used for the polymerization include, but are not limited to, vinyl esters of fatty acids, such as vinyl acetate, vinyl formate, vinyl propionate, vinyl caprylate, or vinyl versatate, etc. The vinyl ester-based monomer may be a single type or two or more types. Preferred among these is vinyl acetate for industrial applications.

In the polymerization of the vinyl ester-based monomer, the vinyl ester-based monomer may be copolymerized with another monomer as long as the effects of the present invention can be achieved. In other words, the polymerization components of the vinyl ester-based polymer may include a vinyl ester-based monomer and another monomer.

Examples of said another monomer that can be used for copolymerization include, but are not limited to, α-olefins, such as ethylene, propylene, n-butene, and isobutylene; (meth)acrylic acid and salts thereof; (meth)acrylic esters, including (meth)acrylic alkyl esters, such as C₁₋₂₀ alkyl (meth)acrylates, such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, dodecyl (meth)acrylate, and octadecyl (meth)acrylate); (meth)acrylamide; (meth)acrylamide derivatives, such as N-methyl(meth)acrylamide, N-ethyl(meth)acrylamide, N,N-dimethyl(meth)acrylamide, and N-methylol(meth)acrylamide; vinyl ethers, such as C₁₋₂₀ alkyl vinyl ethers, such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles, such as acrylonitrile and methacrylonitrile; vinyl halides, such as vinyl chloride and vinyl fluoride; vinylidene halides, such as vinylidene chloride and vinylidene fluoride; allyl compounds, such as allyl acetate and allyl chloride; vinylsilyl compounds, such as vinyltrimethoxysilane; alkenyl esters of fatty acids, such as isopropenyl acetate; etc. The said another monomer may be a single type or two or more types.

When said another monomer is a monomer having an ionic group, the PVA-based polymer (B-3) can be obtained.

Examples of the monomer having an ionic group include those exemplified above, including monomers having an acid group, including monomers having a carboxyl group, such as monocarboxylic acids such as aliphatic unsaturated monocarboxylic acids (such as acrylic acid, methacrylic acid, or crotonic acid) or polycarboxylic acids such as aliphatic unsaturated dicarboxylic acids (such as itaconic acid, maleic acid, or fumaric acid) and salts thereof; monomers having a sulfonic acid group, e.g., alkenyl sulfonic acids (such as vinylsulfonic acid or allylsulfonic acid), alkenylarene sulfonic acids (such as styrene sulfonic acid), amide-based monomers having a sulfonic acid group (such as 2-acrylamide-2-methylpropanesulfonic acid) and salts thereof; monomers having an ionic group other than those above, e.g., monomers having an amino group, such as (meth)acrylamide propyl dimethylamine, and salts thereof; etc.

When such another monomer is used, the amount of such another monomer is selected as appropriate for the monomer used or other factors, and may be, for example, 0.1 to 20% by mass relative to the total amount of the polymerization components.

A chain transfer agent may coexist in the polymerization of the vinyl ester-based monomer to adjust the degree of polymerization of the resulting vinyl ester-based polymer or for other purposes.

Examples of the chain transfer agent include, but are not limited to, aldehydes, such as acetaldehyde, propionaldehyde, butyraldehyde, or benzaldehyde; ketones, such as acetone, methyl ethyl ketone, hexanone, or cyclohexanone; mercaptans, such as 2-hydroxyethanethiol, dodecylmercaptan, 3-mercaptopropionic acid, mercaptosuccinic acid, or sodium 3-mercapto-1-propanesulfonate; and organic halides, such as carbon tetrachloride, trichloroethylene, or perchloroethylene.

However, according to investigations by the present inventors, when common chain transfer agents, such as aldehydes or organic halides are used, the temperature (T) at which the weight loss rate exceeds 0.5%/min tends to decrease (although the reason is unknown, probably thermally unstable structures are likely to be introduced at the terminals etc.). Therefore, when an aldehyde or an organic halide is used as a chain transfer agent, the chain transfer agent is desirably in an amount that satisfies the requirement 2.

When the chain transfer agent is a chain transfer agent having an ionic group, the PVA-based polymer (B-4) can be obtained.

Examples of the chain transfer agent having an ionic group include those exemplified above, including alcohols having an ionic group, carbonyl compounds having an ionic group, thiols having an ionic group, such as thiols having an acid group, for example, thiols having a carboxyl group, such as mercapto saturated fatty acids, such as mercaptoalkanoic acids, such as 3-mercaptopropionic acid and mercaptosuccinic acid; thiols having a sulfonic acid group, such as mercapto alkane sulfonic acids, such as 3-mercapto-1-propanesulfonic acid, and salts thereof, such as sodium 3-mercapto-1-propanesulfonate; and the like.

The amount of the chain transfer agent added is selected as appropriate for the chain transfer constant of the chain transfer agent added and the intended degree of polymerization of the vinyl ester-based polymer. Typically, the amount of the chain transfer agent is desirably 0.1 to 10% by mass relative to the total amount of the polymer components.

The vinyl ester-based polymer obtained as described above can be subjected to a saponification reaction to give the PVA-based polymer (C) or even the PVA-based polymer (B-3) or (B-4).

The saponification reaction of the vinyl ester-based polymer may be performed by any method in accordance with a conventionally known method. For example, the saponification reaction may be performed by alcoholysis or hydrolysis using a hydroxide of an alkali metal, such as sodium hydroxide or potassium hydroxide, or an acidic catalyst including an inorganic acid, such as hydrochloric acid, sulfuric acid, nitric acid, or phosphoric acid, or an organic acid, such as formic acid, acetic acid, oxalic acid, or p-toluenesulfonic acid.

The solvent used in the saponification reaction may be, for example, an alcohol such as methanol or ethanol; an ester such as methyl acetate or ethyl acetate; a ketone such as acetone or methyl ethyl ketone; an aromatic hydrocarbon such as benzene or toluene; etc. The solvent may be a single type or a combination of two or more types.

When a gelatinous product precipitates as the saponification reaction proceeds, the gelatinous product is crushed and dried to give a polyvinyl alcohol-based polymer. Before drying, the remaining catalyst is preferably neutralized. A neutralizing agent may be used, and may be an acidic substance such as acetic acid or phosphoric acid, for a basic catalyst; or may be an alkaline substance, such as sodium hydroxide or potassium hydroxide, for an acidic catalyst.

The drying of the polyvinyl alcohol-based polymer (C) (and also (B-3) and (B-4)) can be performed under an oxidizing atmosphere such as in air, etc., or under an inert atmosphere, e.g., nitrogen.

The drying temperature may be a normal temperature (may be natural drying), or the drying may be performed under heating or at a high temperature. To efficiently dry the polyvinyl alcohol-based polymer, the drying temperature may typically be 30°C or more, 35°C or more, 40°C or more, 45°C or more, 50°C or more, 55°C or more, 60°C or more, 70°C or more, etc. The upper limit of the drying temperature may be, but is not limited to, for example, 250°C, 220°C, 200°C, 180°C, 160°C, 150°C, 140°C, 130°C, 120°C, 110°C, 100°C, 90°C, 80°C, etc.

However, according to investigations by the present inventors, when the drying is performed under an atmosphere with a large proportion of oxygen, such as in air, or at a high temperature, the temperature (T) at which the weight loss rate exceeds 0.5%/min tends to decrease (although the reason is unknown, probably thermally unstable structures are likely to be introduced at the backbone etc.). Therefore, when the drying is performed under an oxidizing atmosphere, under heating, or at a high temperature, the oxidizing gas in the atmosphere and/or the temperature is desirably at a level that satisfies the requirement 2.

Due to the reasons described above, the drying is preferably performed under an inert atmosphere at a temperature that is not excessively high, e.g., 120°C or less, less than 120°C, 115°C or less, 110°C or less, 100°C or less, 90°C or less, 70 to 110°C, etc.

The drying time is not particularly limited, and can be selected depending on the drying temperature, etc., and may be, for example, about 1 to 12 hours.

### Acetalization

The method for acetalizing, for example, the PVA-based polymer ((C), (B-3) or (B-4)) with a carbonyl compound (such as an aldehyde) having a polymerizable unsaturated bond or a carbonyl compound having an ionic group according to the present invention may be performed by any method, and may be performed by a known acetalization method.

The PVA-based polymer (A-1) can be obtained by acetalizing the PVA-based polymer (C) with a carbonyl compound having a polymerizable unsaturated bond. The PVA-based polymer (A-2) can be obtained by acetalizing the PVA-based polymer (C) with a carbonyl compound having a polymerizable unsaturated bond and a carbonyl compound having an ionic group.

The PVA-based polymer (A-3 or A-4) can be obtained by acetalizing the PVA-based polymer having an ionic group (B-3 or B-4) with a carbonyl compound having a polymerizable unsaturated bond.

The amount of the carbonyl compound used in the acetalization may be, but is not limited to, for example, about 0.05 to 50 parts by mass, preferably about 0.1 to 20 parts by mass, and more preferably about 0.2 to 10 parts by mass, relative to 100 parts by mass of the PVA-based polymer.

The acetalization reaction is preferably performed in the presence of an acidic catalyst. Examples of the acidic catalyst may include, but are not limited to, inorganic acids such as hydrochloric acid, sulfuric acid, nitric acid, or phosphoric acid; organic acids such as formic acid, acetic acid, oxalic acid, or p-toluenesulfonic acid; etc.

The amount of the acidic catalyst used may be, but is not limited to, for example, 0.1 to 10 parts by mass relative to 100 parts by mass of the PVA-based polymer.

Specific examples of the acetalization method include:
(i) a method including saponifying a vinyl ester-based polymer in a solvent such as methanol in the presence of a basic catalyst such as sodium hydroxide to prepare a solution of a PVA-based polymer, then acetalizing the PVA-based polymer with an aldehyde or the like in the presence of an acidic catalyst, and neutralizing the acetalized PVA-based polymer with a basic substance to give a solution of a PVA-based polymer (A);
(ii) a method including saponifying a vinyl ester-based polymer in a solvent such as methanol in the presence of an acidic catalyst as a saponification catalyst to prepare a PVA-based polymer, then acetalizing the PVA-based polymer with an aldehyde or the like in the presence of the acidic catalyst used in the saponification, and neutralizing the acetalized PVA-based polymer with a basic substance to give a solution of a PVA-based polymer (A);
(iii) a method including simultaneously performing saponification reaction and acetalization reaction of a vinyl ester-based polymer in a solvent in the presence of an acidic catalyst and an aldehyde or the like, and neutralizing the product with a basic substance to give a solution of a PVA-based polymer (A);
(iv) a method including adding an aldehyde or the like to an aqueous liquid of a PVA-based polymer to react the PVA-based polymer with the aldehyde or the like in the presence of an acidic catalyst, and neutralizing the resulting liquid with a basic substance to give an aqueous liquid of a PVA-based polymer (A);
(v) a method including directly adding an aldehyde or the like to a slurry or powder of a PVA-based polymer, or adding a liquid of an aldehyde or the like dissolved or dispersed in an organic solvent or water to a slurry or powder of a PVA-based polymer to react the PVA-based polymer with the aldehyde or the like in the presence of an acidic catalyst, then neutralizing the product with a basic substance, and removing the excessive solvent to give a PVA-based polymer (A); or
other methods.

In the methods (i) to (iii), the solvent may be dried off after the solution of a PVA-based polymer (A) is obtained, and the PVA-based polymer is provided in a solid form. The solvent may be replaced with water to provide an aqueous liquid of the PVA-based polymer (A).

In the method (iv), which provides the PVA-based polymer (A) as an aqueous liquid, the aqueous liquid of the PVA-based polymer (A) can be directly used in suspension polymerization of vinyl chloride, etc.

In the method (v), in which a slurry of the PVA-based polymer is reacted with an aldehyde or the like, the resulting PVA-based polymer is in a solid form, which is easy to handle.

In the methods (i) to (v), the preparation method of the aqueous liquid of the PVA-based polymer, and the methods of saponification, neutralization, dissolution, dispersion and drying may be performed by any methods, and may be performed by conventional methods.

The basic substance used in the neutralization may be, but is not limited to, for example, a hydroxide of an alkali metal, such as sodium hydroxide or potassium hydroxide, etc.

The pH of the reaction mixture of the acetalization is preferably 3.0 or less, and more preferably 1.0 or less to achieve an appropriate reaction rate. The pH of the reaction liquid after the neutralization is preferably 4.7 to 9.0, and more preferably 7.0 to 8.5.

The drying of the polyvinyl alcohol-based polymer (A) can be performed in the same manner as in the drying of the polyvinyl alcohol-based polymer (C) (also (B-3) or (B-4)). The drying conditions, including drying atmosphere, drying temperature, drying time (e.g., 1 to 12 hours, etc.), etc., and preferred embodiments thereof (including the reasons therefor) are also as described above. For example, the drying is preferably performed under an inert atmosphere, such as nitrogen, at a temperature that is not excessively high (e.g., 70 to 110°C).

### Applications, production method of vinyl-based polymer, etc.

The PVA-based polymer (A) can be used for various applications including, for example, use as a dispersing agent, or use in a film. The PVA-based polymer (A) is especially suitable as a dispersion stabilizing agent or a dispersing agent, for example, a dispersion stabilizing agent or a dispersing agent for polymerization, such as suspension polymerization, as described above.

Accordingly, use of the dispersion stabilizing agent (or the PVA-based polymer (A); the same applies to the below) of the present invention, and a method for producing a vinyl-based polymer by polymerization (in particular, suspension polymerization) using the dispersion stabilizing agent will be described below.

Suspension polymerization in the present invention is a polymerization process in which an insoluble vinyl-based monomer and an oil-soluble polymerization initiator are added to an aqueous solvent and stirred to form small droplets containing the vinyl-based monomer, and polymerization occurs within the droplets. The aqueous solvent used herein may include, but is not limited to, for example, water, an aqueous solution containing any type of components, a mixed solvent of water and a water-compatible organic solvent, etc.

The PVA-based polymer (A) in the present invention can be used as a dispersion stabilizing agent for suspension polymerization of a vinyl-based monomer. The vinyl-based monomer is preferably, but not limited to, for example, a vinyl-based monomer that is commonly subjected to suspension polymerization, such as vinyl chloride, vinylidene chloride, styrene, an acrylic ester, a methacrylic ester, vinyl acetate, acrylonitrile, etc. Particularly preferred is a vinyl chloride-based monomer.

Examples of the vinyl chloride-based monomer include a vinyl chloride monomer (vinyl chloride), and a mixture of a vinyl chloride monomer and another monomer copolymerizable with the vinyl chloride monomer. Examples of said another monomer copolymerizable with the vinyl chloride monomer include monomers such as vinylidene chloride, vinyl acetate, ethylene, propylene, acrylic acid, an acrylic ester, methacrylic acid, a methacrylic ester, styrene, a vinylalkoxysilane, maleic acid, a hydroxyalkyl acrylate, allylsulfonic acid, vinyl sulfonic acid, etc.

The dispersion stabilizing agent of the present invention is thus suitable for suspension polymerization of a vinyl-based monomer containing a vinyl chloride-based monomer (in particular, vinyl chloride). In particular, the dispersion stabilizing agent of the present invention is suitable for use in the homopolymerization of vinyl chloride by suspension polymerization. The dispersion stabilizing agent of the present invention can also be used in binary copolymerization or multicomponent copolymerization of three or more types of monomers by suspension polymerization of vinyl chloride with one or more monomers selected from known monomers copolymerizable with vinyl chloride. In particular, the dispersion stabilizing agent is suitable for use as a dispersion stabilizing agent for suspension copolymerization of vinyl chloride with vinyl acetate.

Suspension polymerization of a vinyl-based monomer containing vinyl chloride will yield a vinyl chloride-based resin. In the production of the vinyl chloride-based resin, the amount of vinyl chloride is preferably 50 to 100 mol% or 50 to 100% by mass relative to the total amount of the vinyl-based monomers used.

A polymerization initiator used in suspension polymerization of a vinyl-based monomer may be a known polymerization initiator, including, for example, percarbonate compounds, such as diisopropyl peroxydicarbonate, di-2-ethylhexyl peroxydicarbonate, or diethoxyethyl peroxydicarbonate; perester compounds, such as benzoyl peroxide, t-butyl peroxyneodecanoate, α-cumyl peroxyneodecanoate, or t-butyl peroxydecanoate; peroxides, such as acetyl cyclohexylsulfonyl peroxide or 2,4,4-trimethylpentyl-2-peroxyphenoxyacetate; azo compounds, such as 2,2'-azobis(isobutyronitrile), azobis(2,4-dimethylvaleronitrile), or azobis(4-methoxy-2,4-dimethylvaleronitrile); benzoyl peroxide; lauroyl peroxide; etc. These compounds can be used in combination with potassium persulphate, ammonium persulphate, hydrogen peroxide, or the like.

A major role of the dispersion stabilizing agent in suspension polymerization of a vinyl-based monomer is to stabilize droplets of the vinyl-based monomer and a polymer generated therefrom within the droplets to prevent the adhesion of the generated polymer particles between the droplets, thereby preventing the formation of large aggregates. The dispersion stabilizing agent of the present invention has high dispersibility and thus, even when used in a small amount, facilitates the formation of stable droplets and prevents the formation of aggregates due to the adhesion of the droplets.

The formation of stable droplets means that fine droplets substantially uniform in size are stably dispersed in a dispersion medium in suspension polymerization.

The amount of the dispersion stabilizing agent of the present invention (or the PVA-based polymer (A)) used in suspension polymerization of a vinyl-based monomer is, but not limited to, typically 5 parts by mass or less, preferably 0.005 to 1 part by mass, and further preferably 0.01 to 0.2 parts by mass, relative to 100 parts by mass of the vinyl-based monomer. The dispersion stabilizing agent of the present invention may typically be dissolved in a dispersion medium for suspension polymerization by a conventional method before the addition of a vinyl-based monomer, as in the case of a conventional dispersion stabilizing agent.

The dispersion stabilizing agent of the present invention may be used alone or in combination with another type of dispersion stabilizing agent in suspension polymerization of a vinyl-based monomer. Examples of said another type of dispersion stabilizing agent include known dispersion stabilizing agents used in suspension polymerization of a vinyl-based monomer, such as vinyl chloride, in an aqueous solvent, for example, PVAs and modified PVA-based polymers having an average degree of polymerization of 100 to 4500 and a degree of saponification of 30 to 100 mol% other than those described in the present invention; water-soluble cellulose ethers, such as methyl cellulose, hydroxyethyl cellulose, and hydroxypropyl cellulose; water-soluble polymers, such as gelatin; oil-soluble emulsions, such as sorbitan monolaurate, sorbitan trioleate, glycerol tristearate, and an ethylene oxide-propylene oxide block polymer; water-soluble emulsifiers, such as polyoxyethylene glycerol oleate and sodium laurate; etc. These dispersing agents may be used as a single type or a combination of two or more types.

The dispersion stabilizing agent used in the present invention is preferably a combination of two or more types of PVA-based polymers having different degrees of polymerization and saponification, and one or more types in the combination are preferably the PVA-based polymer (A), which serves as the dispersion stabilizing agent of the present invention. More preferably, a PVA-based polymer having high dispersion stability and having a degree of polymerization of 1700 or more is used in combination with a PVA-based polymer having a degree of polymerization of 1000 or less, and one or more types in the combination are the PVA-based polymer (A) of the present invention.

Any type of known dispersion aid can be used in suspension polymerization using the dispersion stabilizing agent of the present invention. The dispersion aid may be a PVA having a low degree of saponification, preferably a degree of saponification of 30 to 60 mol%, more preferably 35 to 55 mol%, or the like. The dispersion aid is preferably a PVA preferably having an average degree of polymerization of 160 to 900, more preferably 200 to 500, or the like.

In addition to the dispersion aid, various types of known additives can be used in the suspension polymerization of a vinyl-based compound, and examples of the additives include a chain transfer agent, a polymerization inhibitor, a pH adjuster, a scale inhibitor, and a crosslinking agent.

The polymerization temperature in suspension polymerization is not limited to a particular one and can be selected depending on the type of vinyl-based monomer used, the intended degree of polymerization of a polymer, the intended yield of polymerization, etc. Typically, the polymerization temperature is preferably 40 to 70°C. The polymerization time is also not limited to a particular one and is set as appropriate for the intended yield of polymerization, etc.

The vinyl-based polymer obtained by the production method of the present invention as described above can be formed into various types of molded products etc. In particular, a vinyl chloride-based resin having an average particle size in an appropriate range and exhibiting high plasticizer absorption can be efficiently produced, and such a vinyl chloride-based resin is often easily formed into various types of molded products.

### EXAMPLES

The present invention will be specifically described in more detail below with reference to Examples, but the present invention is not limited thereto.

The terms "%" and "parts" in the Examples and the Comparative Examples below mean "% by mass" and "parts by mass," respectively, unless otherwise specified.

First, the evaluation methods of PVAs and vinyl chloride polymers (vinyl chloride resins) in the Examples will be described below.

### Measurement methods of degree of polymerization and viscosity of 4% by mass aqueous solutions (4% viscosity) at 20°C

The measurements were performed in accordance with the methods stipulated in JIS K 6726.

### Measurement method of degree of saponification

The measurement was performed in accordance with the method stipulated in JIS K 6726.

### Measurement method of amount of polymerizable unsaturated bonds contained in PVAs

To an aqueous solution of 5 g of a PVA-based polymer dissolved in 150 g of pure water in an Erlenmeyer flask, a 0.5 mol/L solution of bromine in acetic acid was added to titrate the solution until the (yellow) color of bromine disappeared. The molar amount (µmol) of bromine required to titrate the solution was divided by the weight (g) of the PVA to calculate the amount (µmol/g) of polymerizable unsaturated bonds contained in the PVA.

### Thermogravimetry

Thermogravimetry was performed using NEXTA STA 200RV manufactured by Hitachi High-Tech Science Corporation under the following conditions:
- nitrogen flow rate: 100 mL/min,
- sample weight: 5 to 6 mg,
- measurement temperature range: 50 to 500°C, and
- heating rate: 10°C/min.

The weight loss rate (%/min) was calculated from the results of thermogravimetry to determine a temperature (T) at which the weight loss rate (%/min) is 0.5%/min in a temperature range of 150°C or more. The temperature range of 150°C or more was set because the weight loss at a temperature less than 150°C is likely mainly due to be volatile components (the remaining volatile components, such as water, methanol, and methyl acetate) contained in the measurement samples. The samples were prepared as follows: PVA-based polymers (A) each were subjected to Soxhlet extraction using methanol as a solvent, and the obtained samples were dried at 120°C for 1 hour in vacuo, pulverized with a pulverizer, and then sieved through a 60 mesh sieve.

### Measurement method of cloud point of PVA aqueous solutions

A 4% PVA aqueous solution at 20°C was placed into a quartz cell with a 10 mm optical path length. The transmittance of the sample was continuously measured at 430 mm using an ultraviolet-visible spectrometer (manufactured by JASCO Corporation; V-730) while the sample was heated at a rate of 2°C/min starting at 20°C. The cloud point was determined as the temperature at which the transmittance reached 50% relative to that of a blank (pure water).

### Evaluation method of storage stability of PVA aqueous solutions

A beaker containing a 4% PVA aqueous solution was placed in a constant-temperature water bath at 30°C. After 24 hours, the aqueous solution was visually observed and evaluated by the following criteria:
○: the aqueous solution remained homogeneous, and
×: the aqueous solution was separated into two layers.

### Evaluation methods of vinyl chloride polymers

Vinyl chloride polymers were evaluated as follows.

### Average particle size

The average particle size was determined by measuring the particle size distribution using a Ro-Tap sieve shaker (using a JIS sieve).

### Plasticizer absorption

Glass fibers were packed in the bottom of a cylindrical container, and a produced resin was placed into the container. An excessive amount of dioctyl phthalate (abbreviated as DOP below) was added and left to stand for 30 minutes to allow DOP to infiltrate into the resin. The resin was centrifuged at 3000 rpm to remove excessive DOP. The weight of the resin was measured to calculate the amount of the DOP absorbed into 100 parts of the polymer. When the amount of DOP absorbed into the resin is larger, the resin has higher plasticizer absorption and more excellent molding processability.

### Evaluation of thermal stability of vinyl chloride polymers

A blend was prepared by combining 100 parts by mass of a vinyl chloride polymer, 0.5 parts by mass of a dioctyltin mercapto-based stabilizer, 0.8 parts by mass of a fatty acid ester-based lubricant, and 0.5 parts by mass of calcium stearate. The blend was melted and kneaded using a plastograph (Labo Plastomill manufactured by Toyo Seiki Seisaku-sho, Ltd.) under the conditions of a mixer temperature of 180°C and a rotor speed of 40 rpm. The time from the start of kneading until the resin was blackened and the torque of the rotor started to increase was measured. When the time is longer, the polymer has better thermal stability.

### Example 1

### Synthesis of PVA-based polymer (C)

In a reaction vessel equipped with a stirrer, a condenser, a nitrogen gas inlet and an initiator feed inlet, 55 parts of methanol and 45 parts of vinyl acetate monomers were placed. The system was heated to 60°C while nitrogen gas was passed through the system. To the mixture, 5 parts of a 1% solution of 2,2'-azobis(2,4-dimethylvaleronitrile) (ADVN) in methanol was added as an initiator to initiate polymerization.

During the polymerization, the system was maintained at 60°C. Immediately after the initiation of the polymerization, 90 parts of vinyl acetate monomers were continuously added to the mixture over 4 hours while nitrogen gas was passed through the system. At 1 and 2 hours after the initiation of the polymerization, 1 part of a 1% solution of ADVN in methanol was added. When the reaction yield of vinyl acetate reached 85%, the system was cooled to terminate the polymerization. The concentration of acetaldehyde at the end of polymerization was 100 ppm. Methanol vapor was added to the resulting polymerization product to distill off the remaining vinyl acetate monomers to give a 50% solution of polyvinyl acetate in methanol.

To 100 parts of the 50% solution of polyvinyl acetate in methanol, 14 parts of methyl acetate and 6 parts of a 3% solution of sodium hydroxide in methanol were added and the mixture was thoroughly stirred to allow a saponification reaction to proceed at 40°C. The resulting gelatinous material was crushed and immersed in a solvent mixture (200 parts) of 100 parts of methanol and 100 parts of methyl acetate. The mixture was neutralized by adding acetic acid to a pH of 9. Solid-liquid separation was performed. The resulting sample was dried at 80°C under a nitrogen atmosphere for 5 hours. The resulting powder of a PVA-based polymer (C) was analyzed and determined to have a degree of saponification of 76 mol%. A 4% by mass aqueous solution of the PVA-based polymer (C) had a viscosity of 5.5 mPa·s at 20°C.

### Synthesis of PVA-based polymer (A-1)

In a solvent mixture of 150 parts of methanol and 300 parts of methyl acetate, 100 parts of the powder of the PVA-based polymer (C) prepared above was immersed. Then, 0.8 parts of acrolein was added and the mixture was maintained at 50°C for 1 hour. After 5 parts of a 50% solution of p-toluenesulfonic acid in methanol was added, the mixture was reacted at 50°C for 1 hour.

The mixture was then neutralized by adding 10 parts of a 5% solution of sodium hydroxide in methanol. The pH after the neutralization was 7.5.

The solvent was removed by centrifugation, and the residue was dried at 80°C under a nitrogen atmosphere for 5 hours to give a PVA-based polymer (A-1). The PVA-based polymer (A-1) was analyzed and determined to have a degree of saponification of 77 mol%. A 4% by mass aqueous solution of the PVA-based polymer (A-1) had a viscosity of 5.8 mPa·s at 20°C (with an average degree of polymerization of about 600) and a cloud point of 35°C. The degrees of saponification and polymerization were determined by the methods specified in JIS K 6726.

The amount of double bonds derived from acrolein was 80 µmol/g. Thermogravimetry revealed that the temperature (T) at which the weight loss rate exceeds 0.5%/min was 272°C. Even after a 4% aqueous solution of the PVA was maintained at 30°C for 24 hours, the aqueous solution remained homogeneous.

### Suspension polymerization of vinyl chloride

Suspension polymerization of vinyl chloride was performed by using the PVA-based polymer (A-1) prepared above as a dispersion stabilizing agent as follows.

In a pressure-resistant stainless steel vessel for polymerization were added 120 parts of deionized water and 1.5 parts of a 4% aqueous solution of the PVA-based polymer (A-1) prepared above (0.06 parts of the PVA-based polymer (A-1) relative to 100 parts of vinyl chloride monomers). After the vessel was degassed with a vacuum pump to an internal pressure of 50 mmHg, 100 parts of vinyl chloride monomers were added, and 0.06 parts of t-butyl peroxyneodecanoate was added as a polymerization initiator. The mixture was stirred and the temperature was raised. Suspension polymerization was performed while the temperature inside the vessel was maintained at 57°C. When the polymerization conversion of vinyl chloride reached 88%, the polymerization reaction was terminated. The unreacted monomers were removed with a vacuum trap. The polymer slurry was discharged from the vessel, dehydrated, and dried to give a vinyl chloride polymer (a vinyl chloride resin).

### Examples 2 to 12

Various types of PVA-based polymers (A-1) shown in Table 1 were synthesized in the same manner as in Example 1 except that the polymerization conditions, the saponification conditions, the type and amount of the aldehyde used for the acetalization reaction, and the like were changed as appropriate.

The PVA-based polymers (A-1) each were used to perform suspension polymerization of vinyl chloride in the same manner as in Example 1 to give vinyl chloride polymers.

### Comparative Examples 1 to 4

Various types of PVA-based polymers (A-1) shown in Table 1 were synthesized as described later. The PVA-based polymers (A-1) each were used to perform suspension polymerization of vinyl chloride in the same manner as in Example 1 to give vinyl chloride polymers.

The results of the evaluation of the PVA-based polymers (A-1) and the resulting vinyl chloride polymers are summarized in Table 1 below.

**[Table 1]**

| | PVA-based polymer (C) | | | | | | PVA-based polymer (A-1) | | | | | | | Evaluation of vinyl chloride resin | | |
|---|---|---|---|---|---|---|---|---|---|---|---|---|---|---|---|---|
| | Chain transfer agent | 4% Viscosity | Degree of saponification | Drying conditions | | | Acetal skeleton (a) | 4% Viscosity | Degree of saponifica-tion | Bromate titration | Thermo-gravimetry | Evaluation of physical properties of aqueous solution | | | | |
| | | | | Atmosphere | Temp. | Time | | | | Amount of double bonds | Temp. (T) | Storage stability | Cloud point | Average particle size | Plasticizer absorption | Blackening time |
| | | mPa·s | mol% | | °C | h | Aldehyde | mPa·s | mol% | µmol/g | °C | | °C | µm | % | min |
| Example 1 | - | 5.5 | 76 | Nitrogen | 80 | 5 | Acrolein | 5.8 | 77 | 80 | 272 | ○ | 35 | 135 | 21 | 60 |
| Example 2 | - | 5.5 | 76 | Nitrogen | 80 | 5 | Methacrolein | 5.8 | 77 | 80 | 269 | ○ | 32 | 127 | 21 | 60 |
| Example 3 | - | 5.5 | 76 | Nitrogen | 80 | 5 | Crotonaldehyde | 5.8 | 77 | 80 | 270 | ○ | 32 | 133 | 21 | 60 |
| Example 4 | - | 5.5 | 76 | Nitrogen | 80 | 5 | Citral | 5.9 | 77 | 80 | 270 | ○ | 30 | 130 | 22 | 60 |
| Example 5 | - | 5.5 | 76 | Nitrogen | 80 | 5 | Cinnamaldehyde | 6.0 | 77 | 80 | 271 | ○ | 28 | 123 | 22 | 60 |
| Example 6 | - | 5.5 | 76 | Nitrogen | 80 | 5 | 10-Undecenal | 6.0 | 77 | 80 | 268 | ○ | 28 | 133 | 22 | 60 |
| Example 7 | - | 5.5 | 76 | Nitrogen | 80 | 5 | 2,4-Hexadienal | 5.8 | 77 | 80 | 265 | ○ | 30 | 125 | 21 | 60 |
| Example 8 | - | 5.5 | 76 | Nitrogen | 80 | 5 | Acrolein | 5.8 | 77 | 20 | 273 | ○ | 40 | 145 | 20 | 62 |
| Example 9 | - | 5.5 | 76 | Nitrogen | 80 | 5 | Acrolein | 5.8 | 77 | 400 | 264 | ○ | 28 | 122 | 20 | 58 |
| Example 10 | - | 25 | 76 | Nitrogen | 80 | 5 | Acrolein | 26 | 77 | 80 | 267 | ○ | 40 | 135 | 22 | 58 |
| Example 11 | - | 30 | 76 | Nitrogen | 80 | 5 | Acrolein | 31 | 77 | 80 | 269 | ○ | 30 | 133 | 20 | 62 |
| Example 12 | - | 5.5 | 87 | Nitrogen | 80 | 5 | Acrolein | 5.5 | 88 | 80 | 274 | ○ | 60 or more | 137 | 19 | 60 |
| Comparable Example 1 | - | 5.5 | 76 | Air | 150 | 5 | Acrolein | 5.8 | 77 | 80 | 252 | ○ | 35 | 140 | 18 | 54 |
| Comparable Example 2 | - | 5.5 | 77 | Nitrogen | 80 | 5 | - | - | - | 0 | 275 | ○ | 45 | Abnormal polymerization (formation of blocks) | | |
| Comparable Example 3 | Carbon tetrachloride | 5.5 | 77 | Nitrogen | 80 | 5 | - | - | - | 80 | 220 | ○ | 40 | 145 | 20 | 48 |
| Comparable Example 4 | Acetaldehyde | 5.5 | 77 | Nitrogen | 130 | 5 | - | - | - | 80 | 252 | ○ | 40 | 143 | 18 | 52 |

As shown in the Table above, when the PVA-based polymers (A-1) obtained in Examples 1 to 12 each were used for suspension polymerization of vinyl chloride, the resulting vinyl chloride resins had excellent polymerization stability, an average particle size within an appropriate range, high plasticizer absorption, and excellent thermal stability.

### Comparative Example 1

A PVA-based polymer (A-1) was synthesized in the same manner as in Example 1 except that the PVA-based polymer (C) was dried in air at 150°C for 5 hours. The resulting PVA-based polymer (A-1) had low thermal stability.

Suspension polymerization of vinyl chloride was performed in the same manner as in Example 1, but the resulting vinyl chloride had low thermal stability.

### Comparative Example 2

Suspension polymerization of vinyl chloride was performed in the same manner as in Example 1 except that the PVA-based polymer (A-1) was replaced with a PVA-based polymer (C) with the following characteristics: a 4% by mass aqueous solution of the PVA-based polymer (C) had a viscosity of 5.5 mPa·s at 20°C (with an average degree of polymerization of about 600), and the PVA-based polymer (C) had a degree of saponification of 77 mol% and had no double bonds. However, the resulting vinyl chloride resin was formed into blocks, and normal polymerization was not observed.

### Comparative Example 3

Polymerization of vinyl acetate was performed in the presence of carbon tetrachloride to produce polyvinyl acetate. The polyvinyl acetate was saponified in the same manner as in Example 1 to give a PVA-based polymer with the following characteristics: a 4% by mass aqueous solution of the PVA-based polymer had a viscosity of 5.5 mPa·s at 20°C (with an average degree of polymerization of about 600), and the PVA-based polymer had a degree of saponification of 77 mol%, contained double bonds in an amount of 80 µmol/g, and had a temperature (T) of 220°C. Suspension polymerization of vinyl chloride was performed in the same manner as in Example 1 using this PVA-based polymer, but the resulting vinyl chloride resin had low thermal stability.

### Comparative Example 4

Polymerization of vinyl acetate was performed in the presence of acetaldehyde to produce polyvinyl acetate. The polyvinyl acetate was saponified in the same manner as in Example 1 to give a PVA-based polymer with the following characteristics: the PVA-based polymer had a degree of saponification of 77 mol% and a 4% by mass aqueous solution of the PVA-based polymer had a viscosity of 5.5 mPa·s at 20°C (with an average degree of polymerization of about 600). The PVA-based polymer was dried under a nitrogen atmosphere at 130°C for 5 hours to give a PVA-based polymer containing double bonds in an amount of 80 µmol/g and having a temperature (T) of 252°C. Suspension polymerization of vinyl chloride was performed in the same manner as in Example 1 using this PVA-based polymer, but the resulting vinyl chloride resin had low thermal stability.

### Examples 13 to 15

Various types of PVA-based polymers (A-2) shown in Table 2 were synthesized in the same manner as in Example 1 except that the saponification conditions, the type (among two types) and the amount of the aldehyde used for the acetalization reaction, and the like were changed as appropriate. The PVA-based polymers (A-2) each were used to perform suspension polymerization of vinyl chloride in the same manner as in Example 1 to give vinyl chloride polymers. The results of the evaluation of the PVA-based polymers (A-2) and the resulting vinyl chloride polymers are summarized in Table 2 below.

**[Table 2]**

| | PVA-based polymer (A-2) | | | | | | | | | Evaluation of vinyl chloride resin | | |
|---|---|---|---|---|---|---|---|---|---|---|---|---|
| | Acetal skeleton (a) | Ionic skeleton (b) | | 4% Viscosity | Degree of saponification | Bromate titration | Thermogravimetry | Evaluation of physical properties of aqueous solution | | | | |
| | Aldehyde 1 | Aldehyde 2 | Amount | | | Amount of double bonds | Temperature (T) | Storage stability | Cloud point | Average particle size | Plasticizer absorption | Blackening time |
| | | | mol% | mPa·s | mol% | µmol/g | °C | | °C | µm | % | min |
| Example 13 | Acrolein | 4-Formylbenzoic acid | 0.1 | 5.8 | 72 | 80 | 270.00 | ○ | 35 | 135 | 22 | 60 |
| Example 14 | Cinnamaldehyde | 4-Formylbenzoic acid | 0.1 | 6.0 | 72 | 80 | 271.00 | ○ | 30 | 123 | 23 | 60 |
| Example 15 | Acrolein | 2-Formylbenzenesulfonic acid | 01 | 5.8 | 72 | 80 | 270.00 | ○ | 35 | 137 | 22 | 60 |

### Example 16

### Synthesis of PVA-based polymer (B-3)

In a reaction vessel equipped with a stirrer, a condenser, a nitrogen gas inlet and an initiator feed inlet, 55 parts of methanol and 45 parts of vinyl acetate monomers were placed. The system was heated to 60°C while nitrogen gas was passed through the system. To the mixture, 6 parts of a 1% solution of 2,2'-azobis(2,4-dimethylvaleronitrile) (ADVN) in methanol was added as an initiator to initiate polymerization.

During the polymerization, the system was maintained at 60°C. Immediately after the initiation of the polymerization, 90 parts of vinyl acetate monomers and 2 parts of a 20% solution of itaconic acid in methanol were continuously added to the mixture over 4 hours while nitrogen gas was passed through the system. At 1 and 2 hours after the initiation of the polymerization, 1.2 parts of a 1% solution of ADVN in methanol was added. When the reaction yield of vinyl acetate reached 85%, the system was cooled to terminate the polymerization. Methanol vapor was added to the resulting polymerization product to distill off the remaining vinyl acetate monomers to give a 50% solution of polyvinyl acetate in methanol.

To 100 parts of the 50% solution of polyvinyl acetate in methanol, 14 parts of methyl acetate and 6 parts of a 3% solution of sodium hydroxide in methanol were added and the mixture was thoroughly stirred to allow a saponification reaction to proceed at 40°C. The resulting gelatinous material was crushed and immersed in a solvent mixture (200 parts) of 100 parts of methanol and 100 parts of methyl acetate. The mixture was neutralized by adding acetic acid to a pH of 9. Solid-liquid separation was performed. The resulting sample was dried at 80°C under a nitrogen atmosphere for 5 hours. The resulting powder of a PVA-based polymer (B-3) was analyzed and determined to have a degree of saponification of 71 mol%. A 4% by mass aqueous solution of the PVA-based polymer (B-3) had a viscosity of 5.5 mPa·s at 20°C (with an average degree of polymerization of about 600). The PVA-based polymer (B-3) contained 0.2 mol% of itaconic acid.

### Synthesis of PVA-based polymer (A-3)

A PVA-based polymer (A-3) shown in Table 3 was synthesized in the same manner as in Example 1.

### Suspension polymerization of vinyl chloride

The PVA-based polymer (A-3) was used to perform suspension polymerization of vinyl chloride in the same manner as in Example 1 to give a vinyl chloride polymer.

### Examples 17 to 20

Various types of PVA-based polymers (A-3) shown in Table 3 were synthesized in the same manner as in Example 16 except that various conditions were changed as appropriate.

The PVA-based polymers (A-3) each were used to perform suspension polymerization of vinyl chloride in the same manner as in Example 1 to give vinyl chloride polymers.

The results of the evaluation of the PVA-based polymers (A-3) and the resulting vinyl chloride polymers are summarized in Table 3 below. In the table, "AMPS" means sodium 2-acrylamide-2-methylpropanesulfonate.

**[Table 3]**

| | PVA-based polymer (A-3) | | | | | | | | | Evaluation of vinyl chloride resin | | |
|---|---|---|---|---|---|---|---|---|---|---|---|---|
| | Acetal skeleton (a) | Ionic skeleton (b) | | 4% Viscosity | Degree of saponification | Bromate titration | Thermogravimetry | Evaluation of physical properties of aqueous solution | | | | |
| | Aldehyde | Copolymerizable monomer | Amount | | | Amount of double bonds | Temperature (T) | Storage stability | Cloud point | Average particle size | Plasticizer absorption | Blackening time |
| | | | mol% | mPa·s | mol% | µmol/g | °C | | °C | µm | % | min |
| Example 16 | Acrolein | Itaconic acid | 0.2 | 5.8 | 72 | 80 | 270 | ○ | 35 | 130 | 22 | 60 |
| Example 17 | Cinnamaldehyde | Monomethyl maleate | 0.2 | 6.0 | 72 | 80 | 265 | ○ | 30 | 129 | 23 | 60 |
| Example 18 | Acrolein | Acrylic acid | 0.2 | 5.8 | 72 | 80 | 270 | ○ | 30 | 136 | 22 | 60 |
| Example 19 | Acrolein | Sodium allylsulfonate | 0.4 | 5.8 | 72 | 80 | 261 | ○ | 50 or more | 146 | 21 | 58 |
| Example 20 | Acrolein | AMPS | 0.2 | 5.8 | 72 | 80 | 266 | ○ | 50 or more | 148 | 20 | 58 |

### Example 21

### Synthesis of PVA-based polymer (B-4)

In a reaction vessel equipped with a stirrer, a condenser, a nitrogen gas inlet and an initiator feed inlet, 20 parts of methanol, 80 parts of vinyl acetate monomers, and 0.02 parts of 3-mercaptopropionic acid were placed. The system was heated to 60°C while nitrogen gas was passed through the system. To the mixture, 1.5 parts of a 1% solution of 2,2'-azobis(2,4-dimethylvaleronitrile) (ADVN) in methanol was added as an initiator to initiate polymerization.

During the polymerization, the system was maintained at 60°C. Immediately after the initiation of the polymerization, 2 parts of a 10% solution of 3-mercaptopropionic acid in methanol was continuously added to the mixture over 4 hours while nitrogen gas was passed through the system. At 1 and 2 hours after the initiation of the polymerization, 0.5 parts of a 1% solution of ADVN in methanol was added. When the reaction yield of vinyl acetate reached 80%, the system was cooled to terminate the polymerization. Methanol vapor was added to the resulting polymerization product to distill off the remaining vinyl acetate monomers to give a 50% solution of polyvinyl acetate in methanol.

To 100 parts of the 50% solution of polyvinyl acetate in methanol, 14 parts of methyl acetate and 6 parts of a 3% solution of sodium hydroxide in methanol were added and the mixture was thoroughly stirred to allow a saponification reaction to proceed at 40°C. The resulting gelatinous material was crushed and immersed in a solvent mixture (200 parts) of 100 parts of methanol and 100 parts of methyl acetate. The mixture was neutralized by adding acetic acid to a pH of 9. Solid-liquid separation was performed. The resulting sample was dried at 80°C under a nitrogen atmosphere for 5 hours. The resulting powder of a PVA-based polymer (B-4) was analyzed and determined to have a degree of saponification of 71 mol%. A 4% by mass aqueous solution of the PVA-based polymer (B-4) had a viscosity of 5.5 mPa·s at 20°C (with an average degree of polymerization of about 600). The PVA-based polymer (B-4) contained 0.2 mol% of 3-mercaptopropionic acid.

### Synthesis of PVA-based polymer (A-4)

A PVA-based polymer (A-4) shown in Table 4 was synthesized in the same manner as in Example 1.

### Suspension polymerization of vinyl chloride

The PVA-based polymer (A-4) was used to perform suspension polymerization of vinyl chloride in the same manner as in Example 1 to give a vinyl chloride polymer.

### Examples 22 to 24

Various types of PVA-based polymers (A-4) shown in Table 4 were synthesized in the same manner as in Example 21 except that various conditions were changed as appropriate.

The PVA-based polymers (A-4) each were used to perform suspension polymerization of vinyl chloride in the same manner as in Example 1 to give vinyl chloride polymers.

The results of the evaluation of the PVA-based polymers (A-4) and the resulting vinyl chloride polymers are summarized in Table 4 below. In the table, "MPS" means sodium 3-mercapto-1-propanesulfonate.

**[Table 4]**

| | PVA-based polymer (A-4) | | | | | | | Evaluation of physical properties of aqueous solution | | Evaluation of vinyl chloride resin | | |
|---|---|---|---|---|---|---|---|---|---|---|---|---|
| | Acetal skeleton (a) | Ionic skeleton (b) | | 4% Viscosity | Degree of saponification | Bromate titration | Thermogravimetry | | | | | |
| | Aldehyde | Chain transfer agent | Amount | | | Amount of double bonds | Temperature (T) | Storage stability | Cloud point | Average particle size | Plasticizer absorption | Blackening time |
| | | | mol% | mPa·s | mol% | µmol/g | °C | | °C | µm | % | min |
| Example 21 | Acrolein | 3-Mercaptopropionic acid | 0.2 | 5.8 | 72 | 80 | 268 | ○ | 33 | 136 | 23 | 58 |
| Example 22 | Cinnamaldehyde | 3-Mercaptopropionic acid | 0.2 | 6.0 | 72 | 80 | 266 | ○ | 29 | 121 | 22 | 58 |
| Example 23 | Acrolein | Mercaptosuccinic acid | 0.2 | 5.8 | 72 | 80 | 264 | ○ | 34 | 135 | 23 | 58 |
| Example 24 | Acrolein | MPS | 0.2 | 5.8 | 72 | 80 | 265 | ○ | 33 | 133 | 23 | 58 |

When the PVA-based polymers (A-2, A-3, and A-4) obtained in Examples 13 to 24 each were used for suspension polymerization of vinyl chloride, the resulting vinyl chloride resins had excellent polymerization stability, an average particle size within an appropriate range, high plasticizer absorption, and excellent thermal stability.

### INDUSTRIAL APPLICABILITY

The present invention provides a specific polyvinyl alcohol-based polymer. The polyvinyl alcohol-based polymer is suitable for use as a dispersion stabilizing agent (a dispersing agent) etc.

## Claims

1. A polyvinyl alcohol-based polymer (A) satisfying the following requirements 1 and 2:
requirement 1: the polyvinyl alcohol-based polymer (A) has a polymerizable unsaturated bond, and
requirement 2: when determined by thermogravimetry in a temperature range of 150°C or more, a temperature at which a weight loss rate exceeds 0.5%/min is 255°C or more.

2. The polyvinyl alcohol-based polymer (A) according to claim 1, wherein the polymerizable unsaturated bond is in an amount of 3 µmol/g or more.

3. The polyvinyl alcohol-based polymer (A) according to claim 1 or 2, wherein the temperature at which the weight loss rate exceeds 0.5%/min is 258°C or more as determined by thermogravimetry in a temperature range of 150°C or more.

4. The polyvinyl alcohol-based polymer (A) according to claim 1 or 2, wherein the polymerizable unsaturated bond is in an amount of 5 to 500 µmol/g, and
the temperature at which the weight loss rate exceeds 0.5%/min is 260°C or more as determined by thermogravimetry in a temperature range of 150°C or more.

5. The polyvinyl alcohol-based polymer (A) according to claim 1 or 2, wherein the polyvinyl alcohol-based polymer (A) comprises an acetal skeleton (a) having a polymerizable unsaturated bond.

6. The polyvinyl alcohol-based polymer (A) according to claim 1 or 2, wherein the polyvinyl alcohol-based polymer (A) comprises an acetal skeleton (a) having a polymerizable unsaturated bond,
wherein the acetal skeleton (a) comprises a skeleton represented by the following formula (a1): 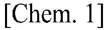 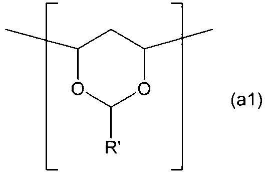
wherein R' represents a group having a polymerizable unsaturated bond.

7. The polyvinyl alcohol-based polymer (A) according to claim 1 or 2, wherein the polyvinyl alcohol-based polymer (A) comprises an acetal skeleton (a) having a polymerizable unsaturated bond,
wherein the acetal skeleton (a) comprises a skeleton represented by the formula (a1), and
wherein the acetal skeleton (a) is contained in an amount of 0.05 to 5 mol% per monomer unit.

8. The polyvinyl alcohol-based polymer (A) according to claim 1 or 2, wherein the polyvinyl alcohol-based polymer (A) further comprises an ionic skeleton (b).

9. The polyvinyl alcohol-based polymer (A) according to claim 1 or 2, wherein the polyvinyl alcohol-based polymer (A) further comprises an ionic skeleton (b), and
wherein the ionic skeleton (b) is contained in an amount of 0.01 to 5 mol% per monomer unit.

10. The polyvinyl alcohol-based polymer (A) according to claim 1 or 2, wherein the polyvinyl alcohol-based polymer (A) has a degree of saponification of 50 to 90 mol%.

11. The polyvinyl alcohol-based polymer (A) according to claim 1 or 2, wherein a 4% by mass aqueous solution of the polyvinyl alcohol-based polymer (A) has a viscosity of 2 to 100 mPa·s at 20°C.

12. A dispersion stabilizing agent comprising the polyvinyl alcohol-based polymer (A) according to claim 1 or 2.

13. The dispersion stabilizing agent according to claim 12, wherein the dispersion stabilizing agent is for polymerization.

14. The dispersion stabilizing agent according to claim 12, wherein the dispersion stabilizing agent is for suspension polymerization.

15. The dispersion stabilizing agent according to claim 12, wherein the dispersion stabilizing agent is for suspension polymerization of a vinyl-based monomer containing vinyl chloride.

16. A method for producing a vinyl-based polymer, the method comprising performing polymerization of a vinyl-based monomer in the presence of the polyvinyl alcohol-based polymer (A) according to claim 1 or 2.

17. The production method according to claim 16, wherein the polymerization is suspension polymerization.

18. The production method according to claim 16, wherein the method comprising performing suspension polymerization of a vinyl-based monomer containing vinyl chloride.
